(19) **Europäisches Patentamt**

**European Patent Office**

**Office européen des brevets**

(11) **EP 4 624 869 A1**

(12) **EUROPEAN PATENT APPLICATION**
published in accordance with Art. 153(4) EPC

(43) Date of publication:
**01.10.2025 Bulletin 2025/40**

(21) Application number: **23911009.1**

(22) Date of filing: **30.12.2023**

(51) International Patent Classification (IPC):
*G01C 21/16* (2006.01)

(52) Cooperative Patent Classification (CPC):
**G01C 21/16; G01C 21/20**

(86) International application number:
**PCT/CN2023/143686**

(87) International publication number:
**WO 2024/141097 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.12.2022 CN 202211732722**
**14.02.2023 CN 202310158835**

(71) Applicant: **Beijing Unicorn Technology Co., Ltd.**
**Beijing 100098 (CN)**

(72) Inventors:
• **LAI, Wenqian**
**Beijing 100098 (CN)**

• **GUO, Ruonan**
**Beijing 100098 (CN)**
• **ZHANG, Chao**
**Beijing 100098 (CN)**
• **HUANG, Can**
**Beijing 100098 (CN)**
• **WU, Kejian**
**Beijing 100098 (CN)**

(74) Representative: **Grünecker Patent- und Rechtsanwälte**
**PartG mbB**
**Leopoldstraße 4**
**80802 München (DE)**

(54) **METHOD AND APPARATUS FOR CORRECTING RELATIVE ATTITUDE OF USER EQUIPMENT AND TARGET DEVICE**

(57) The present disclosure provides a method and apparatus for correcting the relative orientation between a user device and a target device. The user device is provided with a first inertial measurement unit, and the target device is provided with a second inertial measurement unit. A specific implementation solution is as follows: obtaining a predicted state vector, wherein the predicted state vector is determined based on data acquired by the first inertial measurement unit and data acquired by the second inertial measurement unit; obtaining an observed relative position between the user device and the target device, wherein the observed relative position is determined based on non-visual data; determining a first error between the observed relative position and a predicted relative position, wherein the predicted relative position satisfies one of the following two conditions: the predicted relative position is a predicted relative position in the predicted state vector, and the predicted relative position is determined based on a first predicted position and a second predicted position in the predicted state vector; and correcting the predicted state vector using the first error to obtain a corrected relative orientation between the user device and the target device.

Fig. 1

## Description

The present disclosure claims priority to Chinese Patent Application Nos. CN202211732722.7 and CN202310158835.9, filed with the China National Intellectual Property Administration on December 30, 2022 and February 14, 2023 respectively, and entitled "Method and Apparatus for Correcting The Relative orientation between A User Device and A Target Device", which is incorporated herein by reference in its entirety.

## TECHNICAL FIELD

The present disclosure relates to the field of orientation correction technologies, and in particular to a method and apparatus for correcting the relative orientation between a user device and a target device.

## BACKGROUND

In some scenarios, a relative orientation between two devices needs to be calculated and utilized. If the accuracy of the calculated relative orientation is low, an effect of utilizing the relative orientation will be greatly affected.

## SUMMARY

Embodiments of the present disclosure provide a method and apparatus for correcting the relative orientation between a user device and a target device.

According to an aspect of embodiments of the present disclosure, a method for correcting the relative orientation between a user device and a target device is provided, the user device being provided with a first inertial measurement unit, and the target device being provided with a second inertial measurement unit, the method including: obtaining a predicted state vector, wherein the predicted state vector is determined based on data acquired by the first inertial measurement unit and data acquired by the second inertial measurement unit, and the predicted state vector includes at least one of the following two configurations: a predicted relative position, a predicted relative orientation, and a predicted relative velocity between the user device and the target device; and a first predicted position, a first predicted orientation, and a first predicted velocity of the user device in a world coordinate system, and a second predicted position, a second predicted orientation, and a second predicted velocity of the target device in the world coordinate system; obtaining an observed relative position between the user device and the target device, wherein the observed relative position is determined based on non-visual data; determining a first error between the observed relative position and a predicted relative position, wherein the predicted relative position satisfies one of the following two conditions: the predicted relative position is the predicted relative position in the predicted state vector, and the predicted relative position is determined based on the first predicted position and the second predicted position in the predicted state vector; and correcting the predicted state vector using the first error to obtain a corrected relative orientation between the user device and the target device.

According to another aspect of embodiments of the present disclosure, an apparatus for correcting the relative orientation between a user device and a target device is provided, the user device being provided with a first inertial measurement unit, and the target device being provided with a second inertial measurement unit, the apparatus including: a first obtaining module configured to obtain a predicted state vector, wherein the predicted state vector is determined based on data acquired by the first inertial measurement unit and data acquired by the second inertial measurement unit, and the predicted state vector includes at least one of the following two configurations: a predicted relative position, a predicted relative orientation, and a predicted relative velocity between the user device and the target device; and a first predicted position, a first predicted orientation, and a first predicted velocity of the user device in a world coordinate system, and a second predicted position, a second predicted orientation, and a second predicted velocity of the target device in the world coordinate system; a second obtaining module configured to obtain an observed relative position between the user device and the target device, wherein the observed relative position is determined based on non-visual data; a first determination module configured to determine a first error between the observed relative position and a predicted relative position, wherein the predicted relative position satisfies one of the following two conditions: the predicted relative position is the predicted relative position in the predicted state vector, and the predicted relative position is determined based on the first predicted position and the second predicted position in the predicted state vector; and a correction module configured to correct the predicted state vector using the first error to obtain a corrected relative orientation between the user device and the target device.

According to yet another aspect of the present disclosure, there is provided a computer-readable storage medium configured to store a computer program, wherein the computer program is configured to execute the method for correcting the relative orientation between a user device and a target device described above.

According to still another aspect of the present disclosure, there is provided an electronic device including: a processor; and a memory configured to store processor executable instructions, wherein the processor is configured to read the executable instructions from the memory and execute the instructions to implement the method for correcting the relative orientation between a user device and a target device described above.

According to a further aspect of the present disclosure, there is provided a computer program product including computer program instructions, wherein the computer program instructions, when executed by a processor, implements the method for correcting the relative orientation between a user device and a target device described above.

The technical solution of the present disclosure is further described in detail below in conjunction with the accompanying drawings and embodiments.

## BRIEF DESCRIPTION OF THE DRAWINGS

The above and other objects, features and advantages of the present disclosure will become more apparent from more detailed description of embodiments of the present disclosure in conjunction with the accompanying drawings. The accompanying drawings are used to provide further understanding of embodiments of the present disclosure, and form part of the specification, and are used, together with embodiments of the present disclosure, for explaining the present disclosure, but do not limit the present disclosure. In the accompanying drawings, same reference numerals usually represent same components or steps.

Fig. 1 is a schematic flow diagram of a method for correcting the relative orientation between a user device and a target device provided in an exemplary embodiment of the present disclosure.

Fig. 2 is a schematic flow diagram of a method for correcting the relative orientation between a user device and a target device provided in another exemplary embodiment of the present disclosure.

Fig. 3 is a schematic flow diagram of a method for correcting the relative orientation between a user device and a target device provided in yet another exemplary embodiment of the present disclosure.

Fig. 4 is a schematic flow diagram of a method for correcting the relative orientation between a user device and a target device provided in still another exemplary embodiment of the present disclosure.

Fig. 5 is a schematic flow diagram of a method for correcting the relative orientation between a user device and a target device provided in still yet another exemplary embodiment of the present disclosure.

Fig. 6 is a schematic flow diagram of a method for correcting the relative orientation between a user device and a target device provided in a further exemplary embodiment of the present disclosure.

Fig. 7 is a schematic diagram of a relationship between a moving distance, an error corresponding to a relative position dimension, and an error corresponding to a relative orientation dimension in an exemplary embodiment of the present disclosure.

Fig. 8 is a schematic structural diagram of an apparatus for correcting the relative orientation between a user device and a target device provided in an exemplary embodiment of the present disclosure.

Fig. 9 is a schematic structural diagram of an apparatus for correcting the relative orientation between a user device and a target device provided in another exemplary embodiment of the present disclosure.

Fig. 10 is a schematic structural diagram of an apparatus for correcting the relative orientation between a user device and a target device provided in yet another exemplary embodiment of the present disclosure.

Fig. 11 is a schematic structural diagram of an apparatus for correcting the relative orientation between a user device and a target device provided in still another exemplary embodiment of the present disclosure.

Fig. 12 is a schematic structural diagram of an electronic device provided in an exemplary embodiment of the present disclosure.

## DETAILED DESCRIPTION

Exemplary embodiments according to the present disclosure will be described below in detail with reference to the accompanying drawings. Obviously, the described embodiments are only part of, instead of all of embodiments of the present disclosure. It should be understood that the present disclosure is not limited by the exemplary embodiments described here.

It is to be noted that unless specifically stated otherwise, the relative arrangement of components and steps, numerical expressions and numerical values set forth in these embodiments do not limit the scope of the present disclosure.

It may be understood by those skilled in the art that the terms "first", "second" and the like in the embodiments of the present disclosure are only used to distinguish between different steps, devices or modules, etc., and do not represent any particular technical meaning or indicate an inevitable logical order thereof.

It should also be understood that in embodiments of the present disclosure, "plurality" may refer to two or more, and "at least one" may refer to one, two, or more.

It should also be understood that the number of any component, data, or structure mentioned in embodiments of the present disclosure may generally be understood to be one or more, unless explicitly defined or indicated otherwise by the context.

Additionally, the term "and/or" in the present disclosure merely represents an association relationship describing associated objects, indicating there may be three relationships. For example, A and/or B may indicate three situations: A exists alone; both A and B exist; and B exists alone. Additionally, the character "/" in the present disclosure generally indicates that the associated objects prior to and following it are in an "or" relationship.

It should also be understood that description of the various embodiments in the present disclosure emphasizes differences between the various embodiments. For their identical aspects or similarities, reference may be made to each other, and for the sake of brevity, they will not be described repeatedly.

The following description of at least one exemplary embodiment is actually only illustrative, and in no way serves as any limitation on the present disclosure and its application or use.

Technologies, methods, and devices known to those of ordinary skill in the related art may be not discussed in detail, but where appropriate, the technologies, methods, and devices should be regarded as part of the specification.

It should be noted that similar reference numerals and letters denote similar items in the following drawings, so once a certain item is defined in one drawing, it does not need to be further discussed in subsequent drawings.

Embodiments of the present disclosure may be applied to electronic devices such as terminal devices, computer systems, servers, etc., which may operate with numerous other general-purpose or specialized computing system environments or configurations. Examples of well-known terminal devices, computing systems, environments, and/or configurations suitable for use with electronic devices such as terminal devices, computer systems, servers, etc. include, but are not limited to: personal computer systems, server computer systems, thin clients, thick clients, handheld or laptop devices, microprocessor-based systems, set-top boxes, programmable consumer electronics, network personal computers, minicomputer systems, mainframe computer systems, and distributed cloud computing technology environments that include any system described above, and so on.

Electronic devices such as terminal devices, computer systems, servers, etc. may be described in the general context of computer system executable instructions (such as program modules) executed by a computer system. Typically, program modules include routines, programs, target programs, components, logic, data structures, etc., which perform specific tasks or implement specific abstract data types. The computer systems/servers may be implemented in a distributed cloud computing environment, in which tasks are performed by remote processing devices linked through a communication network. In the distributed cloud computing environment, the program modules may be located on a local or remote computing system storage medium that includes a storage device.

Exemplary Overview

In some scenarios, it is necessary to calculate and utilize a relative orientation between a head-mounted display device and a specific object. For example, the relative orientation between the head-mounted display device and the specific object may be referenced to perform rendering, adjustment, control, etc. on a virtual image displayed through the head-mounted display device.

The head-mounted display device may also be referred to as a head-mounted display or HMD. The head-mounted display device may be used to achieve an extended reality (XR) effect, such as to achieve an augmented reality (AR) effect, a virtual reality (VR) effect, a mixed reality (MR) effect, etc. As the head-mounted display device can create a unique sense of immersion, a user can subjectively feel as if being in a space isolated from reality when using the head-mounted display device. This space may serve as a virtual space of the head-mounted display device. Optionally, the head-mounted display device may be AR glasses, VR glasses, MR glasses, or the like.

The virtual image displayed through the head-mounted display device may be rendered, adjusted, controlled, etc. by referencing the relative orientation between the head-mounted display device and the specific object. Achievable effects include, but are not limited to: under the premise of using a coordinate system fixed to the specific object as a reference, if the head-mounted display device and the specific object maintain the same orientation, an orientation of the displayed image will essentially remain unchanged in a coordinate system used by the head-mounted display device. A display effect of the image displayed through the head-mounted display device is similar to an effect of direct screen projection through the head-mounted display device. If the head-mounted display device and the specific object do not maintain the same orientation, the orientation of the displayed image changes accordingly in the coordinate system used by the head-mounted display device. A display effect of the image displayed through the head-mounted display device is similar to a 3dof (degree of freedom) display effect with the specific object as a reference.

When the user wearing the head-mounted display device views the virtual image displayed through the head-mounted display device, sometimes he needs to interact with the virtual image by using a controller. The controller may be communicatively connected to the head-mounted display device, and a relative orientation between the two may be used to control the virtual image displayed through the head-mounted display device. The control herein may include clicking, selecting, dragging, etc.

If the controller needs to be used, it is also necessary to calculate and utilize a relative orientation between the controller and the specific object, so as to perform controlling, etc. on the virtual image displayed through the head-mounted display device by referencing the relative orientation between the controller and the specific object.

In some optional implementations of the present disclosure, the specific object may be an object that is movable relative to a world coordinate system (which may also be referred to as a global coordinate system), for example, a movable platform such as a vehicle, a ship, an airplane, a train, etc., or a user body. Understandably, the term "world coordinate system" in the present disclosure may be a reference coordinate system as a reference, and specific settings thereof are not limited. Different devices may define their own world coordinate systems, and there may be alignment or deviation between the different world coordinate systems defined respectively by the different devices. In the case of a deviation, unaligned world coordinate systems may be aligned by coordinate system transformation.

In other optional implementations of the present disclosure, the specific object may be an object that is immovable relative to the world coordinate system, for example, a wall, a floor, etc.

In order to ensure an effect of utilizing the relative orientation, it is necessary to take certain measures to improve the accuracy and reliability of the relative orientation.

Exemplary system

In embodiments of the present disclosure, a Kalman filter algorithm in a non-inertial frame, a least squares method in the non-inertial frame, or other optimization algorithms may be used to achieve relative orientation correction. A method embodiment section below mainly uses the Kalman filter algorithm as an example for introduction. The principle of the Kalman filter algorithm is first described briefly here.

Overall, the idea of the Kalman filter algorithm is to use a linear system state equation to optimally estimate a system state based on system input and output observation data. The Kalman filter algorithm may typically be divided into two stages: a prediction stage and an update stage.

The prediction stage may be expressed by the following formulas:

$$\bar{x}_k = A_k \hat{x}_{k-1} + u_k$$

$$\bar{P}_k = A_k \hat{P}_{k-1} A_k^T + R$$

The update stage maybe expressed by the following formulas:

$$K = \bar{P}_k C_k^T \left( C_k \bar{P}_k C_k^T + Q \right)^{-1}$$

$$\hat{x}_k = \bar{x}_k + K \left( z_k - C_k \bar{x}_k \right)$$

$$\hat{P}_k = \left( I - K C_k \right) \bar{P}_k$$

where k in lowercase letter form is used as a subscript for parameters and denotes a time, $K$ in uppercase letter form denotes a Kalman gain, $\bar{x}_k$ denotes prior state estimate values at a time k, $A_k$ denotes a state transition matrix at the time k, $\hat{x}_{k-1}$ denotes posterior state estimate values at a time k-1 (i.e., an optimal estimate of the system state at the time k-1), $u_k$ represents a result obtained by transforming an input at the time k using a matrix that transforms an input into a state, $P_k$ denotes a prior estimate covariance matrix at the time k, $\hat{P}_{k-1}$ denotes a posterior estimate covariance matrix at the time k-1, $R$ denotes a process excitation noise covariance, $C_k$ denotes a transition matrix from a state vector to measurements (observations), $Q$ denotes a measurement noise covariance matrix, $\hat{x}_k$ denotes posterior state estimate values at the time k (i.e., an optimal estimate of the system state at the time k), $z_k$ denotes measurement values (observation values) at the time k, $z_k - C_k \bar{x}_k$ denotes a residual between an actual observation and a predicted observation at the time k, $K(z_k - C_k \bar{x}_k)$ denotes a correction vector used to obtain the posterior state estimate values at the time k from the prior state estimate values at the time k, and $\hat{P}_k$ denotes a posterior estimate covariance at the time k.

Exemplary method

Embodiments of the present disclosure provide a method for correcting a relative orientation between a user device and a target device to improve the accuracy and reliability of the relative orientation through the correction of the relative orientation, thereby ensuring an effect of utilizing the relative orientation.

In some optional implementations of the present disclosure, the user device is a head-mounted display device, and the target device is an electronic device other than a head-mounted display device; or the user device is a controller, and the target device is a head-mounted display device; or the user device includes a head-mounted display device and a controller, and the target device is an electronic device other than a head-mounted display device and a controller.

The user device and the target device may be respectively provided with an inertial measurement unit (IMU). To facilitate differentiation, the inertial measurement unit provided in the user device may be referred to as a first inertial measurement unit, and the inertial measurement unit provided in the target device may be referred to as a second inertial measurement unit.

It may be understood that the inertial measurement unit is an apparatus that uses accelerometers and gyroscopes to measure an angular velocity and an acceleration of an object. Thus, the first inertial measurement unit may be used to measure an angular velocity and an acceleration of the user device in a world coordinate system, and the second inertial measurement unit may be used to measure an angular velocity and an acceleration of the target device in the world coordinate system.

In some optional implementations of the present disclosure, the target device may be an integrated device, and the target device may be integrated into a specific object such as a vehicle, a ship, an airplane, a train, etc. A relative position and a relative orientation between the target device and the specific object are fixed. With reference to data respectively acquired by the first inertial measurement unit and the second inertial measurement unit, a relative orientation between the user device and the target device may be determined.

If the target device and the specific object use the same coordinate system, the relative orientation between the user device and the target device may be used directly as a relative orientation between the user device and the specific object.

If the target device and the specific object use different coordinate systems, a transformation relationship (which may be in the form of a transformation matrix) between the coordinate systems used by the target device and the specific object may be pre-determined, and subsequently, the relative orientation between the user device and the specific object may be obtained by transformation from the relative orientation between the user device and the target device with reference to the pre-determined transformation relationship.

In other optional implementations of the present disclosure, the target device may be a portable device, and the target device may be placed at any location according to actual needs, for example, placed on a specific object such as a vehicle, a ship, an airplane, a train, a user's body, a wall, a floor, etc. Thus, with reference to data respectively acquired by the first inertial measurement unit and the second inertial measurement unit, a relative orientation between the user device and the specific object may also be determined.

It is to be noted that the correction of the relative orientation between the user device and the target device may be carried out according to certain time intervals. An interval between any two adjacent correction times may be a preset time interval, or may be determined based on a frequency at which the inertial measurement unit acquires data. A predicted state vector, parameters, and data appearing in the following respectively refer to a predicted state vector at a current correction time, parameters at the current correction time, and data at the current correction time, if not otherwise specified.

According to the five formulas involved in the Kalman filter algorithm above, the current correction time may be denoted as time k, the previous correction time before the current correction time may be denoted as time k-1, and the next correction time after the current correction time may be denoted as time k+1. Thus, the previous correction time, the current correction time, and the next correction time may each involve corresponding prior state estimate values and posterior state estimate values. Optionally, prior state estimate values at any correction time may be used as a predicted state vector at the correction time, and posterior state estimate values at any correction time may be used as a corrected state vector at the correction time.

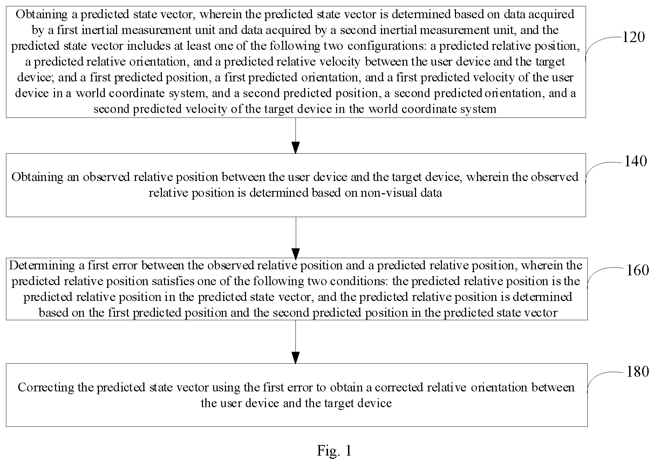

Fig. 1 is a schematic flow diagram of a method for correcting the relative orientation between a user device and a target device provided in an exemplary embodiment of the present disclosure. The method shown in Fig. 1 includes step 120, step 140, step 160, and step 180. The steps will be described below respectively.

Step 120: obtaining a predicted state vector, wherein the predicted state vector is determined based on data acquired by a first inertial measurement unit and data acquired by a second inertial measurement unit, and the predicted state vector includes at least one of the following two configurations: a predicted relative position, a predicted relative orientation, and a predicted relative velocity between the user device and the target device; and a first predicted position, a first predicted orientation, and a first predicted velocity of the user device in a world coordinate system, and a second predicted position, a second predicted orientation, and a second predicted velocity of the target device in the world coordinate system.

It may be understood that in embodiments of the present disclosure, the relative orientation between the user device and the target device may be understood as an orientation of the user device in a device coordinate system of the target device, or may be understood as an orientation of the target device in a device coordinate system of the user device. Correspondingly, the relative position and the relative velocity between the user device and the target device may be understood as a position and a velocity of the user device in the device coordinate system of the target device, or may be understood as a position and a velocity of the target device in the device coordinate system of the user device. The orientation, the position, and the velocity of the user device in the device coordinate system of the target device, and the orientation, the position, and the velocity of the target device in the device coordinate system of the user device may be interconverted by calculating an inverse matrix.

For ease of understanding, embodiments of the present disclosure are all described by using an example in which the relative orientation, the relative position, and the relative velocity between the user device and the target device indicate the orientation, the position, and the velocity of the user device in the device coordinate system of the target device.

The device coordinate system of the target device may be a three-dimensional coordinate system constructed with a center of mass or another location point of the target device as an origin. The device coordinate system of the target device is a coordinate system used by the target device.

By integrating an angular velocity acquired by the first inertial measurement unit between the previous correction time and the current correction time, a first amount of angular change of the user device in the world coordinate system between the previous correction time and the current correction time may be obtained. By integrating an acceleration acquired by the first inertial measurement unit between the previous correction time and the current correction time, a first amount of velocity change and a first amount of positional change of the user device in the world coordinate system between the previous correction time and the current correction time may be obtained.

In a manner similar to that in the above paragraph, a second amount of angular change, a second amount of velocity change, and a second amount of positional change of the user device in the world coordinate system between the previous correction time and the current correction time may be obtained based on an angular velocity and an acceleration acquired by the second inertial measurement unit between the previous correction time and the current correction time.

The manner of determining the predicted state vector at the current correction time is discussed below in two cases.

First case:

Based on the first amount of angular change, the first amount of velocity change, the first amount of positional change, the second amount of angular change, the second amount of velocity change, and the second amount of positional change described above, a relative amount of angular change, a relative amount of velocity change, and a relative amount of positional change of the user device and the target device between the previous correction time and the current correction time may be obtained.

A corrected state vector at the previous correction time may include: a corrected relative position, a corrected relative orientation, and a corrected relative velocity between the user device and the target device at the previous correction time. By superimposing the amount of relative positional change with the corrected relative position between the user device and the target device at the previous correction time, the predicted relative position between the user device and the target device at the current correction time may be obtained. By superimposing the amount of relative angular change with the corrected relative orientation between the user device and the target device at the previous correction time, the predicted relative orientation between the user device and the target device at the current correction time may be obtained. By superimposing the amount of relative velocity change with the corrected relative velocity between the user device and the target device at the previous correction time, the predicted relative velocity between the user device and the target device at the current correction time may be obtained. The predicted state vector including the predicted relative position, the predicted relative orientation, and the predicted relative velocity in step 120 can thus be obtained, and the obtained predicted state vector is the predicted state vector at the current correction time.

Described above is how the predicted state vector at the current correction time is determined when the current correction time is not the first correction time. If the current correction time is the first correction time, a preset relative position, a preset relative orientation, and a preset relative velocity between the user device and the target device may be sequentially used as the corrected relative position, the corrected relative orientation, and the corrected relative velocity in the corrected state vector at the previous correction time. Alternatively, a true relative position, a true relative orientation, and a true relative velocity between the user device and the target device at the current correction time are sequentially used as the corrected relative position, the corrected relative orientation, and the corrected relative velocity in the corrected state vector at the previous correction time. Subsequently, the predicted state vector at the current correction time may be determined with reference to the corrected state vector at the previous correction time and the data respectively acquired by the first inertial measurement unit and the second inertial measurement unit.

Second case:

A corrected state vector at the previous correction time may include: a first corrected position, a first corrected orientation, and a first corrected velocity of the user device in the world coordinate system at the previous correction time, and a second corrected position, a second corrected orientation, and a second corrected velocity of the target device in the world coordinate system at the previous correction time. By superimposing the first amount of positional change with the first corrected position, the first predicted position of the user device in the world coordinate system at the current correction time may be obtained. By superimposing the first amount of angular change with the first corrected orientation, the first predicted orientation of the user device in the world coordinate system at the current correction time may be obtained. By superimposing the first amount of velocity change with the first corrected velocity, the first predicted velocity of the user device in the world coordinate system at the current correction time may be obtained. By superimposing the second amount of positional change with the second corrected position, the second predicted position of the target device in the world coordinate system at the current correction time may be obtained. By superimposing the second amount of angular change with the second corrected orientation, the second predicted orientation of the target device in the world coordinate system at the current correction time may be obtained. By superimposing the second amount of velocity change with the second corrected velocity, the second predicted velocity of the target device in the world coordinate system at the current correction time may be obtained.

Described above is how the predicted state vector at the current correction time is determined when the current correction time is not the first correction time. If the current correction time is the first correction time, a preset position, a preset orientation, and a preset velocity of the user device in the world coordinate system may be sequentially used as the first predicted position, the first predicted orientation, and the first predicted velocity, or a true position, a true orientation, and a true velocity of the user device in the world coordinate system at the current correction time may be sequentially used as the first predicted position, the first predicted orientation, and the first predicted velocity. The second predicted position, the second predicted orientation, and the second predicted velocity are determined in a similar manner, and will not described here.

Step 140: obtaining an observed relative position between the user device and the target device, wherein the observed relative position is determined based on non-visual data.

In some optional implementations of the present disclosure, the non-visual data used to determine the observed relative position may be obtained using a non-visual data capture device. The non-visual data capture device is different from a visual data capture device (e.g., a device having an image sensor, a camera, etc.). The non-visual data capture device includes, but is not limited to, a signal detector, a sensor, etc.

In other optional implementations of the present disclosure, the non-visual data used to determine the observed relative position may be preset data.

Step 160: determining a first error between the observed relative position and a predicted relative position, wherein the predicted relative position satisfies one of the following two conditions: the predicted relative position is the predicted relative position in the predicted state vector, and the predicted relative position is determined based on the first predicted position and the second predicted position in the predicted state vector.

If the predicted state vector of the current correction time includes a predicted relative position, a predicted relative orientation, and a predicted relative velocity, the predicted relative position may be directly extracted from the predicted state vector at the current correction time, and a difference between the extracted predicted relative position and the observed relative position obtained in step 140 may be calculated, and a result obtained may be used as the first error.

If the predicted state vector at the current correction time include a first predicted position, a first predicted orientation, a first predicted velocity, a second predicted position, a second predicted orientation, and a second predicted velocity, the first predicted position and the second predicted position may be extracted from the predicted state vector at the current correction time, and a difference between the first predicted position and the second predicted position may be calculated to obtain a predicted relative position between the user device and the target device. Subsequently, a difference between the calculated predicted relative position and the observed relative position obtained in step 140 may be calculated, and a result obtained may be used as the first error.

Assuming that the observed relative position is denoted as $p_{vg}^{obs}$, the predicted relative position is denoted as $p_{vg}^{predict}$, and the first error is denoted as $p_{vg}^{error}$, then:

$$p_{vg}^{error} = p_{vg}^{obs} - p_{vg}^{predict}.$$

The observed relative position may be regarded as an actual observation, and is data with a smaller error compared with an actual relative position, corresponding to $z_k$ in a Kalman filter algorithm. The predicted relative position may be regarded as a predicted observation, corresponding to $C_k \bar{x}_k$ in the Kalman filter algorithm. The first error may be regarded as a residual between the actual observation and the predicted observation at the current correction time, corresponding to $z_k - C_k \bar{x}_k$ in the Kalman filter algorithm.

It is to be noted that the difference calculation in embodiments of the present disclosure may not be limited to simple subtraction, but may be implemented as a generalized function, which may be used to calculate a difference between different input quantities. For ease of illustration of this solution, formulas herein are described using subtraction as an example.

Step 180: correcting the predicted state vector using the first error to obtain a corrected relative orientation between the user device and the target device.

It is to be noted that the first error corresponds to $z_k - C_k \overline{x}_k$ in the Kalman filter algorithm. The first error embodies an error of a relative position dimension. The first error may be used to determine a correction amount corresponding to the relative position dimension. Since $K$ as a Kalman gain can reflect interrelationships among the various parameters included in the predicted state vector, $K(z_k - C_k \overline{x}_k)$ not only can include the correction amount corresponding to the relative position dimension, but also can include correction amounts corresponding to other dimensions.

The manner of correcting the predicted state vector is discussed below in two cases.

First case:

The predicted state vector at the current correction time include: a predicted relative position, a predicted relative orientation, and a predicted relative velocity. Then, a first correction amount corresponding to the predicted relative position, a second correction amount corresponding to the predicted relative orientation, and a third correction amount corresponding to the predicted relative velocity may be obtained from $K(z_k - C_k \overline{x}_k)$.

By superimposing the predicted relative position with the first correction amount, a correction result for the predicted relative position may be obtained, and the correction result for the predicted relative position may be used as a corrected relative position between the user device and the target device at the current correction time.

By superimposing the predicted relative orientation with the second correction amount, a correction result for the predicted relative orientation may be obtained, and the correction result for the predicted relative orientation may be used as a corrected relative orientation between the user device and the target device at the current correction time (i.e., the corrected relative orientation in step 180).

By superimposing the predicted relative velocity with the third correction amount, a correction result for the predicted relative velocity may be obtained, and the correction result for the predicted relative velocity may be used as a corrected relative velocity between the user device and the target device at the current correction time.

In this way, by correcting the predicted state vector at the current correction time, a corrected state vector at the current correction time is obtained. The corrected state vector at the current correction time include: the corrected relative position, the corrected relative orientation, and the corrected relative velocity between the user device and the target device at the current correction time. The corrected relative position, the corrected relative orientation, and the corrected relative velocity between the user device and the target device at the current correction time may be used to determine a predicted relative position, a predicted relative orientation, and a predicted relative velocity in a predicted state vector at the next correction time. Specifically, reference may be made to the above description of the manner of obtaining the predicted relative position, the predicted relative orientation, and the predicted relative velocity in the predicted state vector at the current correction time from the corrected relative position, the corrected relative orientation, and the corrected relative velocity in the corrected state vector at the previous correction time, which will not be repeated here.

Second case:

The predicted state vector at the current correction time include a first predicted position, a first predicted orientation, a first predicted velocity, a second predicted position, a second predicted orientation, and a second predicted velocity. Then, a fourth correction amount corresponding to the first predicted position, a fifth correction amount corresponding to the first predicted orientation, a sixth correction amount corresponding to the first predicted velocity, a seventh correction amount corresponding to the second predicted position, an eighth correction amount corresponding to the second predicted orientation, and a ninth correction amount corresponding to the second predicted velocity may be obtained from $K(z_k - C_k \overline{x}_k)$.

By superimposing the first predicted orientation with the fifth correction amount, a correction result for the first predicted orientation may be obtained. By superimposing the second predicted orientation with the eighth correction, a correction result for the second predicted orientation may be obtained. By calculating a difference between the correction result for the first predicted orientation and the correction result for the second predicted orientation, a corrected relative orientation between the user device and the target device may be obtained.

In addition, using the fourth correction amount, the sixth correction amount, the seventh correction amount, and the ninth correction amount, respective correction results for the first predicted position, the first predicted velocity, the second predicted position, and the second predicted velocity may also be obtained. These correction results, in combination with the correction result for the first predicted orientation and the correction result for the second predicted orientation obtained in the above paragraph, may form the corrected state vector at the current correction time. The corrected state vector at the current correction time may be used to determine a predicted state vector at the next correction time.

In embodiments of the present disclosure, a predicted state vector may be determined based on data respectively acquired by a first inertial measurement unit provided in a user device and a second inertial measurement unit provided in a target device. With reference to the predicted state vector, a predicted relative position between the user device and the target device may be determined. With reference to the non-visual data, an observed relative position between the user device and the target device may be determined. Using a first error between the observed relative position and the predicted relative position, the predicted state vector may be corrected. In this way, a corrected relative orientation between the user device and the target device can be obtained. The correction of the relative orientation helps ensure an effect of utilizing the relative orientation. In addition, the observed relative position is obtained based on non-visual data, rather than based on visual data acquired by a device having an image sensor. In general, a visual perception method that relies on visual data requires a device that has an image sensor to acquire images, and the image sensor is generally costly. Moreover, a series of processing such as feature point detection and feature point matching needs to be performed on the images, and in high-speed motion scenarios, motion blur and insufficient overlapping areas between adjacent frames are liable to occur, such that feature point matching cannot be performed. As a result, a large amount of computational resources and power is required, and this is not applicable to high-speed motion scenarios. In embodiments of the present disclosure, however, by utilizing non-visual data, the correction of the relative orientation between the user device and the target device can be achieved without relying on visual data, thus effectively saving computational resources and power, and this can be applicable to high-speed motion scenarios.

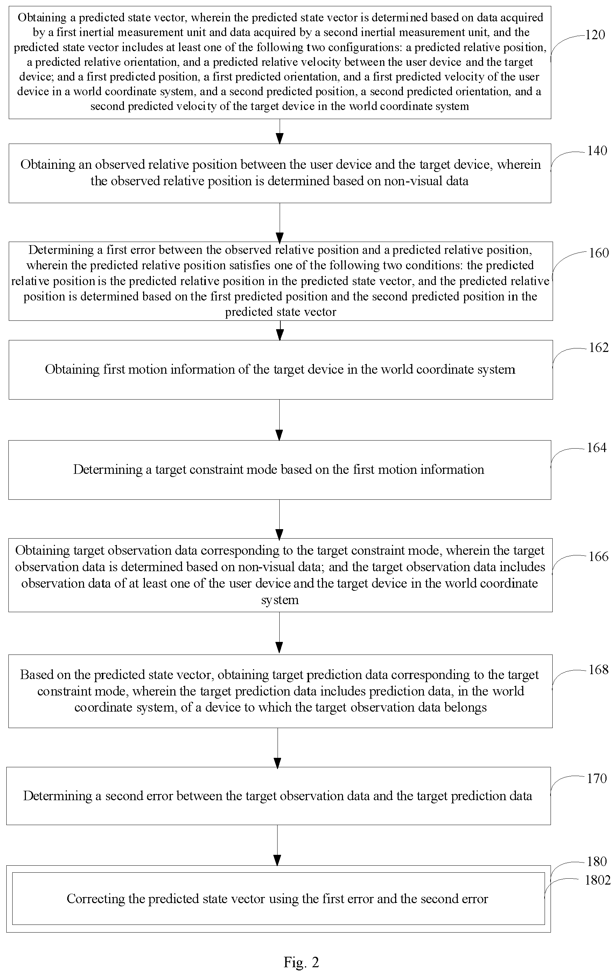

Based on the embodiment shown in Fig. 1, as shown in Fig. 2, the method further includes steps 162, 164, 166, 168, and 170.

Step 162: obtaining first motion information of the target device in the world coordinate system.

It is to be noted that the first motion information may be used to characterize a state of the target device in the world coordinate system, including but not limited to a stationary state and a motion state, and the motion state may be further subdivided into a uniform motion state, a variable motion state, etc.

In some optional implementations of the present disclosure, the target device satisfies one of the following two conditions: the target device is integrated into a movable platform; and the target device is removably fixed to the movable platform.

The first motion information may be determined based on data acquired by at least one type of the following motion sensors: a wheel odometer, a positioning sensor, a gear position sensor, a brake signal sensor, and a target inertial measurement unit.

The wheel odometer, the positioning sensor, the gear position sensor, and the brake signal sensor may all be provided on the movable platform. In response to the target device being integrated in the movable platform, the target inertial measurement unit is the second inertial measurement unit. In response to the target device being removably fixed to the movable platform, the target inertial measurement unit is one of the following two: the second inertial measurement unit, an inertial measurement unit different from the second inertial measurement unit.

A coordinate system used by the movable platform may be referred to as a platform coordinate system. The platform coordinate system may be a three-dimensional coordinate system constructed with a center of mass or another location point of the movable platform as an origin.

The positioning sensors may include a global positioning system (GPS).

In general, to ensure normal and reliable operation of the movable platform, the movable platform needs to be provided with an inertial measurement unit, e.g. with a target inertial measurement unit. If the target device is an integrated device, the target device may be integrated into the movable platform. In this case, the target device may be regarded as a constituent of the movable platform. Thus, the second inertial measurement unit may be used as the target inertial measurement unit. If the target device is a portable device, the target device may be fixed to the movable platform by screwing, snap-fitting, plugging, or hook-and-loop fastening, etc., and the target device may be removable from the movable platform. In this case, the target device may be regarded as another device different from the movable platform. Thus, the target inertial measurement unit may be a third inertial measurement unit. The third inertial measurement unit and the second inertial measurement unit may be different inertial measurement units.

Regardless of whether the target device is integrated into the movable platform or removably fixed to the movable platform, it may be considered that the target device and the movable platform are relatively stationary to each other, and that the target device and the movable platform remain in the same state in the world coordinate system. Therefore, by simply determining the state of the movable platform in the world coordinate system, the state of the target device in the world coordinate system may be determined. In this way, the first motion information may be obtained.

Data respectively acquired by the wheel odometer and the positioning sensor provided on the movable platform may be used to calculate a velocity of the movable platform in the world coordinate system. If the velocity of the movable platform in the world coordinate system remains zero, it may be determined that the target device is in a stationary state in the world coordinate system; otherwise, it may be determined that the target device is in a motion state in the world coordinate system. In this way, the first motion information may be obtained.

Data acquired by the gear position sensor provided on the movable platform may be used to indicate a gear position of the movable platform. If the gear position of the movable platform is maintained at a P gear (i.e., a parking gear), it may be determined that the target device is in the stationary state in the world coordinate system; otherwise, it may be determined that the target device is in the motion state in the world coordinate system. In this way, the first motion information may be obtained.

Data acquired by the brake signal sensor provided on the movable platform may be used to indicate whether the movable platform is stopped by braking. If the movable platform remains stopped by braking, it may be determined that the target device is in the stationary state in the world coordinate system; otherwise, it may be determined that the target device is in the motion state in the world coordinate system. In this way, the first motion information may be obtained.

Data acquired by the target inertial measurement unit may include an angular velocity and an acceleration of the movable platform (or the target device) in the world coordinate system. Based on this, respective variances corresponding the angular velocity and the acceleration acquired by the target inertial measurement unit in the most recent period of time (e.g., the most recent 30 seconds, the most recent 1 minute, etc.) may be calculated. If the variance corresponding to the angular velocity is less than a set first threshold, and the variance corresponding to the acceleration is less than a set second threshold, it may be determined that the target device is in the stationary state in the world coordinate system; otherwise, it may be determined that the target device is in the motion state in the world coordinate system. In this way, the first motion information may be obtained.

Understandably, in addition to the motion sensors listed above, other devices or components may be used, as long as the objectives of embodiments of the present disclosure can be achieved.

In such implementations, regardless of whether the target device is integrated into the movable platform or removably fixed to the movable platform, the first motion information may be determined efficiently and reliably by utilizing data acquired by motion sensors such as the wheel odometer, the positioning sensor, the gear position sensor, the brake signal sensor, the target inertial measurement unit, etc.

Step 164: determining a target constraint mode based on the first motion information.

In some optional implementations of the present disclosure, a plurality of constraint modes may be preset. For example, at least part of first to sixth constraint modes below is preset.

Thus, in step 164, a constraint mode that is adapted to the first motion information may be selected from the preset plurality of constraint modes, and the selected constraint mode may be used as the target constraint mode.

Step 166: obtaining target observation data corresponding to the target constraint mode, wherein the target observation data is determined based on non-visual data; and the target observation data includes observation data of at least one of the user device and the target device in the world coordinate system.

In some optional implementations of the present disclosure, when the plurality of constraint modes are preset, an observation data type required for each constraint mode may also be set.

Thus, in step 166, non-visual data for determining corresponding observation data may be obtained according to an observation data type preset for the target constraint mode, and corresponding observation data may be obtained thereby. The obtained observation data may be used as the target observation data. Optionally, the non-visual data involved in step 166 may be obtained using a non-visual data capture device, or may be preset data.

Step 168: based on the predicted state vector, obtaining target prediction data corresponding to the target constraint mode, wherein the target prediction data includes prediction data, in the world coordinate system, of a device to which the target observation data belongs.

If the target observation data refers to observation data of the target device in the world coordinate system at the current correction time, the target prediction data may refer to prediction data of the target device in the world coordinate system at the current correction time. If the target observation data refers to observation data of the user device in the world coordinate system at the current correction time, the target prediction data may refer to prediction data of the user device in the world coordinate system at the current correction time. If the target observation data refers to respective observation data of the target device and the user device in the world coordinate system at the current correction time, the target prediction data may refer to respective prediction data of the target device and the user device in the world coordinate system at the current correction time.

In some optional implementations of the present disclosure, when the plurality of constraint modes are preset, a prediction data type required for each constraint mode may also be preset.

Thus, in step 168, corresponding prediction data may be obtained based on the predicted state vector according to a prediction data type preset for the target constraint mode. The obtained prediction data may be used as the target prediction data. Optionally, the target prediction data may be data extracted directly from the predicted state vector, or data calculated using data extracted from the predicted state vector.

Step 170: determining a second error between the target observation data and the target prediction data.

In step 170, a difference between the target observation data and the target prediction data may be calculated, and a result obtained may be used as the second error. Similarly to the first error, the second error may also be regarded as a residual between an actual observation and a predicted observation at the current correction time, corresponding to $z_k$ - $C_k\bar{x}_k$ in the Kalman filter algorithm.

Step 180 includes step 1802.

Step 1802: correcting the predicted state vector using the first error and the second error.

It is to be noted that the manner of correcting the predicted state vector using the first error and the second error is similar to that of correcting the predicted state vector using the first error in the embodiment shown in Fig. 1, with the main difference being that more errors are referenced in the correction.

In embodiments of the present disclosure, a suitable constraint mode may be determined with reference to the first motion information of the target device in the world coordinate system, and target observation data and target prediction data may be acquired based on the determined constraint mode. A second error may be obtained using the target observation data and the target prediction data. The second error may be used, together with the first error, to correct the predicted state vector. Thus, more data is referenced for the correction of the predicted state vector, which is conducive to improving a correction effect.

In some optional examples, the predicted state vector further includes at least one of: a first predicted angular velocity bias of the first inertial measurement unit; a first predicted acceleration bias of the first inertial measurement unit; a second predicted angular velocity bias of the second inertial measurement unit; and a second predicted acceleration bias of the second inertial measurement unit.

In some optional implementations of the present disclosure, the corrected state vector at the previous correction time may further include: a corrected angular velocity bias and a corrected acceleration bias of the first inertial measurement unit at the previous correction time, and a corrected angular velocity bias and a corrected acceleration bias of the second inertial measurement unit at the previous correction time. The corrected angular velocity bias of the first inertial measurement unit at the previous correction time may be used as the first predicted angular velocity bias, the corrected acceleration bias of the first inertial measurement unit at the previous correction time may be used as the first predicted acceleration bias, the corrected angular velocity bias of the second inertial measurement unit at the previous correction time may be used as the second predicted angular velocity bias, and the corrected acceleration bias of the second inertial measurement unit at the previous correction time may be used as the second predicted acceleration bias.

Described above are origins of the two biases related to the first inertial measurement unit and the two biases related to the second inertial measurement unit in the predicted state vector at the current correction time. Two biases related to the first inertial measurement unit and two biases related to the second inertial measurement unit in the predicted state vector at the next correction time may be obtained in a similar manner, which will not be repeated here.

In embodiments of the present disclosure, a predicted state vector may be set to include two biases related to the first inertial measurement unit and two biases related to the second inertial measurement unit. Thus, relationships between the biases and other parameters in the predicted state vector may be organically utilized in the process of correcting the predicted state vector, thereby efficiently and reliably achieving the correction of the predicted state vector.

In some optional examples, step 164 includes: in response to the first motion information indicating the target device being in a stationary state, determining that the target constraint mode is a first constraint mode, wherein in response to the target constraint mode being the first constraint mode, the target observation data includes a preset observed velocity of the target device in the world coordinate system, the preset observed velocity being zero, and the target prediction data includes a second predicted velocity.

It may be understood that if the target device is in the stationary state in the world coordinate system, a velocity of the target device in the world coordinate system is theoretically zero. In this case, the target constraint mode may be determined to be the first constraint mode. The first constraint mode may also be referred to as a zero-velocity constraint mode.

Assuming that the second predicted velocity is denoted as $v_v^{predict}$, and the second error is denoted as $v_v^{error}$, $v_v^{error}$ may be calculated by the following formula:

$$v_v^{error} = 0 - v_v^{predict}.$$

In embodiments of the present disclosure, the zero-velocity constraint mode is used in the case where the target device is in the stationary state in the world coordinate system, such that by calculating a difference between the velocities, the second error may be determined efficiently and reliably so as to be for correction of the predicted state vector.

In some optional examples, step 164 includes: in response to the first motion information indicating the target device being in a stationary state, determining that the target constraint mode is a second constraint mode, wherein in response to the target constraint mode being the second constraint mode, the target observation data includes a preset observed angular velocity of the target device in the world coordinate system, the preset observed angular velocity being zero, and the target prediction data includes a difference between an angular velocity of the target device in the world coordinate system and the second predicted angular velocity bias, the angular velocity of the target device in the world coordinate system being acquired by the second inertial measurement unit.

It may be understood that if the target device is in the stationary state in the world coordinate system, the angular velocity of the target device in the world coordinate system is theoretically zero. In this case, the target constraint mode may be determined to be the second constraint mode. The second constraint mode may also be referred to as a zero angular velocity constraint mode.

Assuming that the angular velocity of the target device in the world coordinate system at the current correction time acquired by the second inertial measurement unit is denoted as $\omega_v^{imu}$, the second predicted angular velocity bias is denoted as $bias_v^{gyro-predict}$, and the second error is denoted as $\omega_v^{error}$, $\omega_v^{error}$ may be calculated by the following formula:

$$\omega_v^{error} = 0 - (\omega_v^{imu} - bias_v^{gyro-predict})$$

In embodiments of the present disclosure, the zero angular velocity constraint mode is used in the case where the target device is in the stationary state in the world coordinate system, such that by calculating a difference between the angular velocities, the second error may be determined efficiently and reliably so as to be used for correction of the predicted state vector.

In some optional examples, step 164 includes: in response to the first motion information indicating the target device being in a stationary state, determining that the target constraint mode is a third constraint mode, wherein in response to the target constraint mode being the third constraint mode, the target observation data includes an acceleration of the target device in the world coordinate system, which is acquired by the second inertial measurement unit, and the target prediction data includes an acceleration of the target device in the world coordinate system, which is calculated using the second predicted orientation and a gravitational acceleration in the world coordinate system.

It may be understood that if the target device is in the stationary state in the world coordinate system, an acceleration measured by the second inertial measurement unit is theoretically a gravitational acceleration. That is, a direction of the acceleration of the target device in the world coordinate system acquired by the second inertial measurement unit is theoretically a direction of gravity. In this case, the target constraint mode may be determined to be the third constraint mode. The third constraint mode may also be referred to as a gravity constraint mode for the target device.

Assuming that the acceleration of the target device in the world coordinate system at the current correction time acquired by the second inertial measurement unit is denoted as $a_v$, the second predicted orientation is denoted as $R_v^{predict}$, and the gravitational acceleration in the world coordinate system is denoted as g, then the opposite of the product of $R_v^{predict}$ and g may be regarded as the acceleration of the target device in the world coordinate system at the current correction time obtained by prediction. The second error may be denoted as $g^{error}$, and the second error may be calculated by the following formula:

$$g^{error} = a_v - (- R_v^{predict} \cdot g)$$

In embodiments of the present disclosure, the gravity constraint mode may be used in the case where the target device is in the stationary state in the world coordinate system, such that by calculating a difference between the accelerations, the second error may be determined efficiently and reliably so as to be used for correction of the predicted state vector.

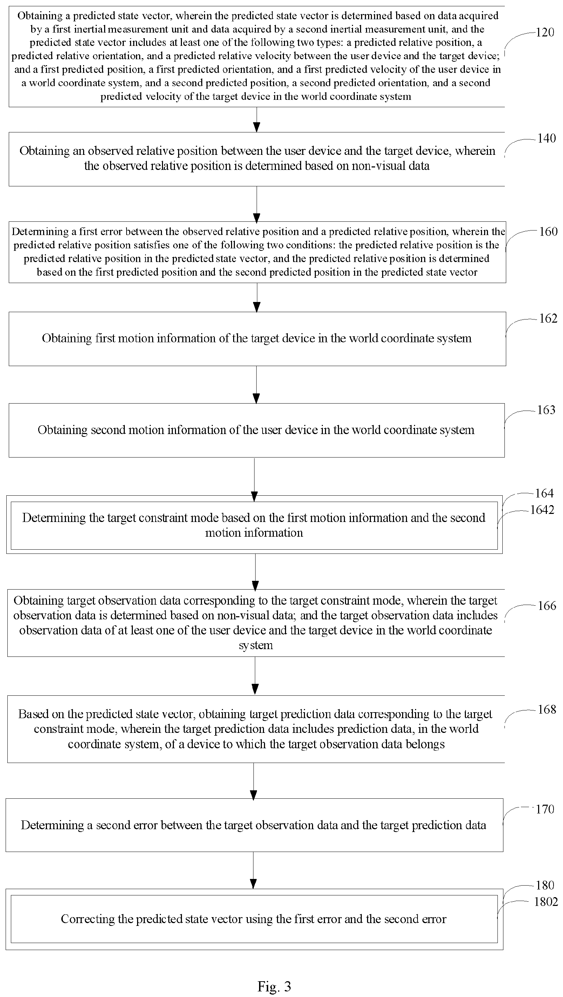

Based on the embodiment shown in Fig. 2, as shown in Fig. 3, before step 164, the method further includes step 163.

Step 163: obtaining second motion information of the user device in the world coordinate system.

It is to be noted that the second motion information may be used to characterize a state of the user device in the world coordinate system, including but not limited to a stationary state and a motion state, and the motion state may be further subdivided into a uniform motion state, a variable motion state, etc.

In some optional implementations of the present disclosure, the second motion information may be determined with reference to data acquired by the first inertial measurement unit. Specifically, reference may be made to the above description of the manner of determining the first motion information based on data acquired by the target inertial measurement unit, which will not be repeated here.

Step 164 includes step 1642.

Step 1642: determining the target constraint mode based on the first motion information and the second motion information.

In step 1642, a constraint mode that is adapted to both the first motion information and the second motion information may be selected from the preset plurality of constraint modes, and the selected constraint mode may be used as the target constraint mode.

In some optional implementations of the present disclosure, step 1642 includes: in response to the first motion information indicating the target device being in a stationary state and the second motion information indicating the user device being in a stationary state, determining that the target constraint mode is a fourth constraint mode, wherein in response to the target constraint mode being the fourth constraint mode, the target observation data includes an acceleration of the user device in the world coordinate system, which is acquired by the first inertial measurement unit, and the target prediction data includes an acceleration of the user device in the world coordinate system, which is calculated using the predicted relative orientation, the second predicted orientation, and a gravitational acceleration in the world coordinate system.

Understandably, if both the target device and the user device are in the stationary state in the world coordinate system, the user device may be considered to be absolutely stationary with respect to the world coordinate system. Then, an acceleration measured by the first inertial measurement unit is theoretically a gravitational acceleration. That is, a direction of the acceleration of the user device in the world coordinate system acquired by the first inertial measurement unit is theoretically a direction of gravity. In this case, the target constraint mode may be determined to be the fourth constraint mode. The fourth constraint mode may also be referred to as a gravity constraint mode for the user device.

Assuming that the acceleration of the user device in the world coordinate system at the current correction time acquired by the first inertial measurement unit is denoted as $a_g$, the second predicted orientation is denoted as $R_v^{predict}$, and the predicted relative orientation is denoted as $R_{vg}^{predict}$, then a result of multiplying $R_v^{predict}$ and $R_{vg}^{predict}$ may be used as the predicted orientation of the user device in the world coordinate system. The predicted orientation may be denoted as $R_g^{predict}$. Assuming that the gravitational acceleration in the world coordinate system is denoted as g, then the opposite of the product of $R_g^{predict}$ and g may be regarded as the acceleration of the user device in the world coordinate system at the current correction time obtained by prediction. The second error may be denoted as $g^{error}$, and the second error may be calculated by the following formula:

$$g^{error} = a_g - (-R_g^{predict} \cdot g)$$

In such implementations, the gravity constraint mode for the user device is used in the case where both the target device and the user device are in the stationary state in the world coordinate system, such that by calculating a difference between the accelerations, the second error may be determined efficiently and reliably so as to be used for correction of the predicted state vector.

In other optional implementations of the present disclosure, step 1642 includes: in response to the first motion information indicating the target device being in a stationary state and the second motion information indicating the user device being in a stationary state, determining that the target constraint mode is a fifth constraint mode, wherein in response to the target constraint mode being the fifth constraint mode, the target observation data includes an acceleration of the user device in the world coordinate system, which is acquired by the first inertial measurement unit, and the target prediction data includes an acceleration of the user device in the world coordinate system, which is calculated using the predicted relative orientation and an acceleration of the target device in the world coordinate system that is acquired by the second inertial measurement unit.

Understandably, if both the target device and the user device are in the stationary state in the world coordinate system, a direction of gravity of the target device and a direction of gravity of the user device are theoretically the same direction in the real world. In this case, the target constraint mode may be determined to be the fifth constraint mode. The fifth constraint mode may also be referred to as a relative gravity constraint mode for both the user device and the target device.

Assuming that the acceleration of the user device in the world coordinate system at the current correction time acquired by the first inertial measurement unit is denoted as $a_g$, the acceleration of the target device in the world coordinate system at the current correction time acquired by the second inertial measurement unit is denoted as $a_v$, and the predicted relative orientation is denoted as $R_{vg}^{predict}$, then the product of $R_{vg}^{predict}$ and $a_v$ may be regarded as the acceleration of the user device in the world coordinate system at the current correction time obtained by prediction. The second error may be denoted as $dg^{error}$, and the second error may be calculated by the following formula:

$$dg^{error} = a_g - R_{vg}^{predict} a_v$$

In such implementations, the relative gravity constraint mode for both the user device and the target device is used in the case where both the target device and the user device are in the stationary state in the world coordinate system, such that by calculating a difference between the accelerations, the second error may be determined efficiently and reliably so as to be used for correction of the predicted state vector.

It is to be noted that the implementation of step 1642 is not limited to the above two cases. For example, it is also possible that in response to the first motion information indicating the target device being in a stationary state and the second motion information indicating the user device being in a motion state, the target constraint mode is determined to be the first constraint mode or the second constraint mode described above.

In embodiments of the present disclosure, the determination of the constraint mode may be carried out with reference to the respective motion information of the target device and the user device in the world coordinate system, which helps ensure the reasonableness and reliability of the determined constraint mode.

In some optional examples, step 164 includes: in response to the first motion information indicating the target device being in a motion state, determining that the target constraint mode is a sixth constraint mode, wherein in response to the target constraint mode being the sixth constraint mode, the target observation data includes at least one of an observed position, an observed orientation, and an observed velocity of the target device in the world coordinate system, and the target prediction data includes at least one of the second predicted position, the second predicted orientation, and the second predicted velocity, and wherein the target observation data and the target prediction data include the same type of parameter; the target observation data is determined based on data acquired by at least one type of the following motion sensors provided on a movable platform: a wheel odometer, and a positioning sensor; and the target device satisfies one of the following two conditions: the target device is integrated into the movable platform, and the target device is removably fixed to the movable platform.

If the target prediction data includes the second predicted position, the target observation data needs to include the observed position; if the target prediction data includes the second predicted orientation, the target observation data needs to include the observed orientation; and if the target prediction data includes the second predicted velocity, the target observation data needs to include the observed velocity.

Data acquired by the wheel odometer provided on the movable platform may be used to calculate a velocity and an angular velocity of the movable platform in the world coordinate system, and an observed velocity of the movable platform in the world coordinate system at the current correction time may be obtained thereby. In addition, in conjunction with an integration operation on velocity and angular velocity, an observed orientation and an observed position of the movable platform in the world coordinate system at the current correction time may also be obtained.

Since the target device and the movable platform are relatively stationary to each other, if the device coordinate system of the target device and the platform coordinate system of the movable platform are the same coordinate system, the observed velocity, the observed orientation, and the observed position of the movable platform in the world coordinate system at the current correction time may be directly used sequentially as the observed velocity, the observed orientation, and the observed position of the target device in the world coordinate system at the current correction time, and the target observation data may be obtained thereby. If the device coordinate system of the target device and the platform coordinate system of the movable platform are different coordinate systems, then with reference to a pre-determined transformation relationship between the coordinate systems respectively used by the target device and the movable platform, the observed velocity, the observed orientation and the observed position of the target device in the world coordinate system at the current correction time may also be obtained by transforming the observed velocity, the observed orientation, and the observed position of the movable platform in the world coordinate system at the current correction time, and the target observation data may also be obtained thereby.

Data acquired by the positioning sensor provided on the movable platform may represent real-time position of the movable platform, and an observed position of the movable platform in the world coordinate system at the current correction time may be obtained thereby. The obtained observed position may be used as the observed position in the target observation data.

In some optional implementations of the present disclosure, if an observed position of the movable platform in the world coordinate system at the current correction time is obtained respectively by using data acquired by the wheel odometer and data acquired by the positioning sensor, the two observed positions may be fused (e.g., by directly performing averaging or by performing weighted averaging) to obtain a fused observed position, and the fused observed position may be used as the observed position in the target observation data.

It may be understood that if the target device is in the motion state in the world coordinate system, the movable platform that is stationary relative to the target device is also in the motion state in the world coordinate system. In this case, it is possible to observe a velocity, an orientation, and a position of the target device in the world coordinate system in real time by using the wheel odometer, the positioning sensor, etc. provided on the movable platform. In this case, the target constraint mode may be determined to be the sixth constraint mode. The sixth constraint mode may also be referred to as a movable platform constraint mode.

Assuming that the target prediction data includes the second predicted position, the target observation data includes the observed position, the second predicted position is denoted as $p_v^{predict}$, the observed position is denoted as $p_v^{obs}$, and the second error is denoted as $p_v^{error}$, $p_v^{error}$ may be calculated by the following formula:

$$p_v^{error} = p_v^{obs} - p_v^{predict}$$

Assuming that the target prediction data includes a second predicted orientation, the target observation data includes an observed orientation, the second predicted orientation is denoted as $R_v^{predict}$, the observed orientation is denoted as $R_v^{obs}$, the second error is denoted as $R_v^{error}$, $R_v^{error}$ may be calculated by the following formula:

$$R_v^{error} = R_v^{obs} - R_v^{predict}$$

Assuming that the target prediction data includes the second predicted velocity, the target observation data includes the observed velocity, the second predicted velocity is denoted as $V_v^{predict}$, the observed velocity is denoted as $V_v^{obs}$, and the second error is denoted as $V_v^{error}$, $V_v^{error}$ may be calculated by the following formula:

$$V_v^{error} = V_v^{obs} - V_v^{predict}$$

It is to be noted that if the number of parameters included in each of the target prediction data and the target observation data is more than one, the second error may be obtained by a combination of at least two of $p_v^{error}$, $R_v^{error}$, and $V_v^{error}$.

In embodiments of the present disclosure, the movable platform constraint mode is used in the case where the target device is in the motion state in the world coordinate system, such that by calculating a difference between at least one of the positions, orientations, and velocities, the second error may be determined efficiently and reliably so as to be used for correction of the predicted state vector.

As can be seen from the above description, the motion sensors such as the wheel odometer, the positioning sensor, etc. provided on the movable platform can be used not only for determining motion information of the movable platform in the world coordinate system so as to obtain the first motion information thereby, but also for determining the second error required for updating the predicted state vector.

Understandably, the above constraint modes applicable to the same motion condition (a first motion condition or a second motion condition) may be superimposed, provided that they are not in conflict. For ease of understanding, these are explained separately above.

In some optional examples, the target device is provided with a first wireless positioning device; the user device is provided with a second wireless positioning device paired with the first wireless positioning device; and the observed relative position is determined through collaborative operation of the first wireless positioning device and the second wireless positioning device.

In some optional implementations of the present disclosure, the first wireless positioning device may be a device integrated into the target device, or may be a separate device different from the target device, fixed to the target device by screwing, snap-fitting, plugging, hook-and-loop fastening, etc. The second wireless positioning device may be a device integrated into the user device, or may be a separate device different from the user device, and may be fixed to the user device by screwing, snap-fitting, plugging, hook-and-loop fastening, etc.

In embodiments of the present disclosure, wireless positioning devices, including but not limited to ultra wideband (UWB) positioning devices, Bluetooth positioning devices, and wireless-fidelity (WiFi) positioning devices, may be provided on the target device and the user device, respectively. In this way, using wireless radio frequency signals transmitted between the paired wireless positioning devices, the observed relative position between the user device and the target device at the current correction time may be obtained efficiently and reliably by calculation, and the obtaining of the observed relative position is not affected even if a user using the user device arbitrarily changes his position, turns his head, and the like, on the movable platform.

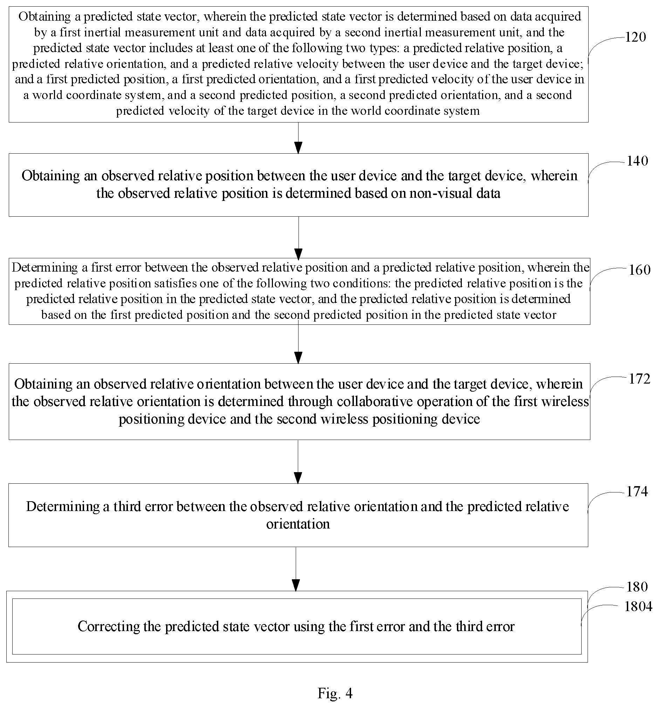

Based on the embodiment shown in Fig. 1, as shown in Fig. 4, the method further includes steps 172 and 174.

Step 172: obtaining an observed relative orientation between the user device and the target device, wherein the observed relative orientation is determined through collaborative operation of the first wireless positioning device and the second wireless positioning device.

In step 172, using wireless radio frequency signals transmitted between the target device and the paired wireless positioning devices provided on the user device, the observed relative orientation between the user device and the target device at the current correction time may also be obtained by calculation.

Step 174: determining a third error between the observed relative orientation and the predicted relative orientation.

In step 174, a difference between the observed relative orientation and the predicted relative orientation may be calculated, and a result obtained may be used as the third error. Similar to the first error, the third error may also be regarded as a residual between an actual observation and a predicted observation at the current correction time, corresponding to $z_k - C_k\overline{x}_k$ in the Kalman filter algorithm.

Step 180 includes step 1804.

Step 1804: correcting the predicted state vector using the first error and the third error.

It is to be noted that for the implementation of step 1804, reference may be made to the above description of the implementation of step 1802, which will not be repeated here.

In embodiments of the present disclosure, an observed relative orientation between the user device and the target device may be obtained by using wireless radio frequency signals transmitted between the paired wireless positioning devices, and a third error may be obtained by calculating a difference between the orientations. The third error may be used, together with the first error, to correct the predicted state vector. In this way, more data is referenced for the correction of the predicted state vector, which is conducive to improving a correction effect.

In some optional examples, the target device satisfies one of the following two conditions: the target device is integrated into a movable platform; and the target device is removably fixed to the movable platform.

Step 140 includes any one of: determining the observed relative position based on a preset position in a platform coordinate system of the movable platform; determining the observed relative position based on position information in the platform coordinate system of the movable platform input by a user; and determining the observed relative position based on a position where a target connection interface is located, wherein the target connection interface is an interface provided on the movable platform for connecting to the user device.

In some optional implementations of the present disclosure, a size of the movable platform may be obtained based on a two-dimensional drawing (e.g., a CAD drawing) of the movable platform. If the size of the movable platform is not large, for example, in the case where the movable platform is a vehicle, and the user is only able to move within a range of a few square meters, a position of the user in the platform coordinate system of the movable platform may be directly preset, and the position may be used as the preset position. If the device coordinate system of the target device and the platform coordinate system of the movable platform are the same coordinate system, the preset position may be directly used as the observed relative position, or an inverse matrix may be calculated for the preset position, and a result obtained may be used as the observed relative position. If the device coordinate system of the target device and the platform coordinate system of the movable platform are different coordinate systems, the preset position may be transformed with reference to a pre-determined transformation relationship between the coordinate systems respectively used by the target device and the movable platform, and a transformation result of the preset position may be directly used as the observed relative position, or an inverse matrix may be calculated for the transformation result of the preset position, and a result obtained may be used as the observed relative position.

In another implementation of the present disclosure, the user may input his position information in the platform coordinate system of the movable platform by touch input, voice input, etc. The position information represents a position in the platform coordinate system of the movable platform. The observed relative position may be determined from the position. For the specific determination manner, reference may be made to the above description of the manner of determining the observed relative position based on the preset position, which will not be repeated here.

In yet another implementation of the present disclosure, the movable platform may be provided with a target connection interface, through which a wired connection between the movable platform and the user device may be achieved. Since a set position of the target connection interface on the movable platform is fixed, an actual position of the user device in the platform coordinate system of the movable platform may be estimated from the position where the target connection interface is located. The observed relative position may be determined from the actual position. For the specific determination manner, reference may be made to the above description of the manner of determining the observed relative position based on the preset position, and which will not be repeated here.

In embodiments of the present disclosure, by means of a preset position, or by means of user-initiated input of position information, or by reference to a position of a connection interface, the obtaining of the first observed position may be achieved using a non-visual perception method.

In some optional examples, the target device satisfies one of the following two conditions: the target device is integrated into a movable platform; and the target device is removably fixed to the movable platform.

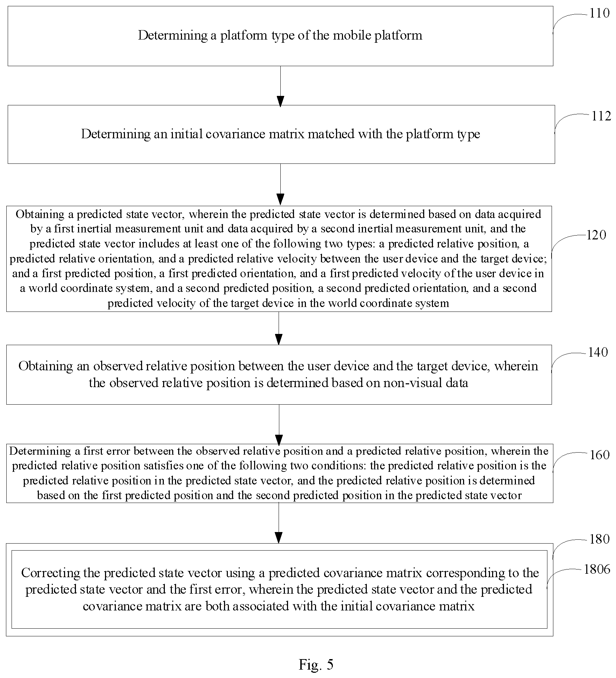

Based on the embodiment shown in Fig. 1, as shown in Fig. 5, the method further includes steps 110 and 112.

Step 110: determining a platform type of the movable platform.

Platform types of movable platforms include, but are not limited to, a vehicle type, a ship type, an airplane type, and a train type, and the vehicle type may be further subdivided into a large vehicle type, a medium vehicle type, a small vehicle type, etc., and the ship type, the airplane type, and the train type, etc., may also be subdivided according to this rule.

In some optional implementations of the present disclosure, communication connection may be established between the user device and the movable platform. In the process of establishing the communication connection, relevant information of the movable platform may be obtained, including but not limited to identification information, type information, etc. By identifying the type information, the platform type of the movable platform may be determined.

In other optional implementations of the present disclosure, the user device may be provided with a camera. The user device may acquire, by the camera, an image of an environment where it is located, and perform target detection on the image to determine which platform type of movable platform the image matches, whereby the platform type of the movable platform may be determined.

Step 112: determining an initial covariance matrix matched with the platform type.

It is to be noted that a correspondence between a platform type and an initial covariance matrix may be preset. In some optional implementations of the present disclosure, the platform type may be used to represent a platform size, and there may be a positive correlation between the platform size and the initial covariance matrix. That is, the larger the size of the movable platform, the larger the corresponding initial covariance matrix; and the smaller the movable platform, the smaller the corresponding initial covariance matrix.

Thus, an initial covariance matrix corresponding to the platform type determined in step 110 may be determined based on the preset correspondence, and the determined initial covariance matrix may be used as the initial covariance matrix in step 112.

Step 180 includes step 1806.

Step 1806: correcting the predicted state vector using a predicted covariance matrix corresponding to the predicted state vector and the first error, wherein the predicted state vector and the predicted covariance matrix are both associated with the initial covariance matrix.

It is to be noted that a Kalman filter process may be performed iteratively multiple times. For example, a corrected state vector and a corresponding corrected covariance matrix at the current correction time may be obtained from a corrected state vector and a corresponding corrected covariance matrix at the previous correction time by one Kalman filter process, and then, a corrected state vector and a corresponding corrected covariance matrix at the next correction time may be obtained from the corrected state vector and the corresponding corrected covariance matrix at the current correction time by another Kalman filter process. At the first execution of the Kalman filter, since there is no corrected covariance matrix at the previous correction time, the initial covariance matrix determined in step 112 may be used as the corrected covariance matrix at the previous correction time to participate in the calculation. In this way, with reference to the platform type of the movable platform, a suitable initial covariance matrix is selected to participate in the calculation, which helps ensure the reasonableness of the initial covariance matrix used in the calculation, thereby ensuring a filtering effect of the Kalman filter.

It is to be noted that the platform type of the movable platform may also be utilized in above process of determining an observed relative position based on a preset position in the platform coordinate system of the movable platform. For example, a preset position matched with the platform type of the movable platform may be determined based on a preset correspondence between a platform type and a preset position, and the determination of the observed relative position may be achieved based on the determined preset position. In this way, with reference to the platform size of the movable platform, a suitable observed relative position can be determined so as to be used for correction of the predicted state vector, thereby ensuring a correction effect.

In some optional examples, the user device is a head-mounted display device, and the method further includes: based on the corrected relative orientation, performing at least one of the following processing on a virtual image displayed through the head-mounted display device: rendering, adjustment, and control.

Optionally, the rendering involved in embodiments of the present disclosure may also be referred to as Render; and the adjustment involved in embodiments of the present disclosure may include at least one of shifting and warping.

In some optional implementations of the present disclosure, a rendering engine of the head-mounted display device may render the virtual image with reference to the corrected relative pose, and update a rendering result to be displayed in a display screen of the head-mounted display device.

In other optional implementations of the present disclosure, with reference to the corrected relative orientation, the virtual image may be rendered, and a display position and orientation of the virtual image on the display screen of the head-mounted display device may be adjusted.

In yet other optional implementations of the present disclosure, with reference to the corrected relative orientation, the virtual image may be rendered, and an optical engine in the head-mounted display device may be configured.

In embodiments of the present disclosure, performing processing such as rendering, adjustment, and control on the virtual image displayed through the head-mounted display device based on the corrected relative orientation enables the head-mounted display device to achieve a predetermined display effect, such as the effect of direct screen projection through the head-mounted display device and the 3dof display effect with the specific object as a reference in the above "Exemplary Overview" section.

In some optional examples, the user device is a controller and the target device is a head-mounted display device, and the method further includes: based on the corrected relative orientation, controlling the virtual image displayed through the head-mounted display device.

Optionally, the controller in embodiments of the present disclosure includes, but is not limited to, a cell phone, a handle, and a ring for controlling the head-mounted display device.

In embodiments of the present disclosure, controlling the virtual image displayed through the head-mounted display device with reference to the corrected relative orientation allows interactions with the virtual image by means of the controller, such as dragging a web page window in the virtual image from one position to another, and as another example, adjusting an emission direction of a virtual ray in the virtual image.

In some optional examples, the user device includes a head-mounted display device and a controller, and the target device satisfies one of the following two conditions: the target device is integrated into a movable platform; and the target device is removably fixed to the movable platform; and the method further includes: based on a corrected relative orientation between the head-mounted display device and the target device, performing at least one of the following processing on a virtual image displayed through the head-mounted display device: rendering, adjustment, and control; and based on a corrected relative orientation between the controller and the target device, controlling the virtual image displayed through the head-mounted display device.

In embodiments of the present disclosure, controlling the virtual image displayed through the head-mounted display device with reference to the corrected relative orientation between the head-mounted display device and the target device, and the corrected relative orientation between the controller and the target device not only enables the head-mounted display device to achieve a predetermined display effect, but also allows interactions with the virtual image by means of the controller.

In order to achieve the correction of the relative orientation between the user device and the target device, a state vector of the Kalman filter algorithm may be set to include at least: a predicted relative position $P_{vg}$, a predicted relative orientation $R_{vg}$, a predicted relative velocity $V_{vg}$ between the user device and the target device, an angular velocity bias $bias_v^{gyro}$ and an acceleration bias $bias_v^{acc}$ of a second inertial measurement unit provided in the target device, and an angular velocity bias $bias_g^{acc}$, and an acceleration bias $bias_g^{gyro}$ of a first inertial measurement unit provided in the user device. Optionally, the state vector of the Kalman filter algorithm may further include: a predicted position $P_v$, a predicted orientation $R_v$, and a predicted velocity $V_v$ of the target device in a world coordinate system. Optionally, the superscript "predict" may be added to each parameter in the state vector, or "predict" may be added after an existing superscript to indicate a predicted state vector.

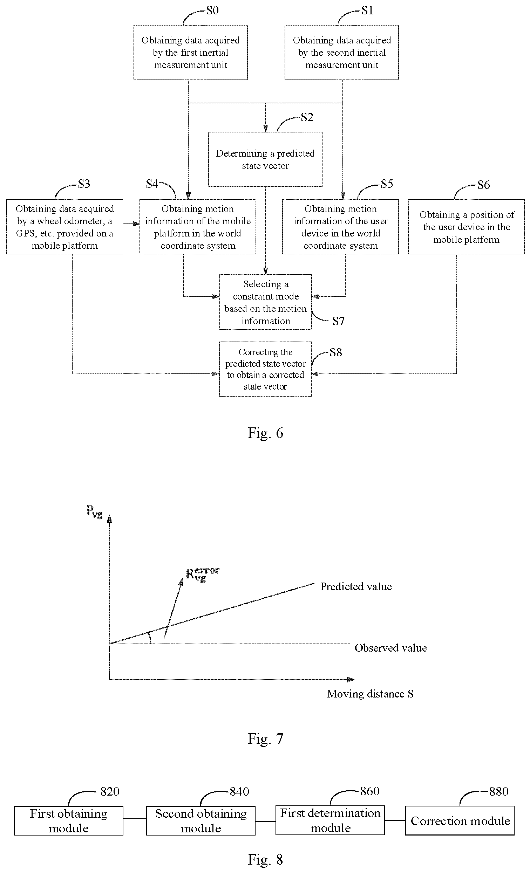

In specific implementation, the target device may be integrated into a movable platform or removably fixed to the movable platform; and the user may use the user device on the movable platform. As shown in Fig. 6, updating of the state vector may be achieved through the following steps:

S0: obtaining data acquired by the first inertial measurement unit.
S1: obtaining data acquired by the second inertial measurement unit.
S2: determining a predicted state vector.
S3: obtaining data acquired by a wheel odometer, a GPS, etc. provided on a movable platform.
S4: obtaining motion information of the movable platform in the world coordinate system (equivalent to the first motion information above).
S5: obtaining motion information of the user device in the world coordinate system (equivalent to the second motion information above).
S6: obtaining a position of the user device in the movable platform (equivalent to the observed relative position above).
S7: selecting a constraint mode based on the motion information.
S8: correcting the predicted state vector to obtain a corrected state vector.

The predicted state vector determined in S2 described above may include at least: $p_{vg}^{predict}$, $R_{vg}^{predict}$, and $v_{vg}^{predict}$, and may further include $bias_v^{gyro-predict}$, $bias_v^{acc-predict}$, $bias_g^{gyro-predict}$, and $bias_g^{acc-predict}$.

In S4 described above, the motion information of the movable platform in the world coordinate system may be determined in at least one of the following manners:

(1) calculating a velocity of the movable platform with reference to the data acquired by the wheel odometer, and determining whether the movable platform is stationary based on the calculated velocity;
(2) obtaining a velocity of the movable platform from a GPS signal, and determining whether the movable platform is stationary based on the calculated velocity;
(3) determining whether the movable platform is stationary with reference to a brake or gear position signal; and
(4) determining whether the movable platform is stationary base on whether variances of an angular velocity and an acceleration of an inertial measurement unit (which may be the second inertial measurement unit or a third inertial measurement unit) of the movable platform in a recent period of time are less than respective set thresholds.

In S5 described above, the motion information of the user device in the world coordinate system may be determined based on whether the variances of the angular velocity and the acceleration of the first inertial measurement unit in the recent period of time is less than the respective set thresholds.

In S6 describe above, the observed relative position may be obtained by collaborative operation of paired wireless positioning devices, or may be obtained by means of a preset position, or by means of user-initiated input of position information, or by reference to a position of a connection interface. It is to be noted that the use of the observed relative position for the correction of the predicted state vector may be referred to as a relative position constraint mode.

In S7 described above, a suitable constraint mode (i.e., the target constraint mode above) may be selected based on the respective motion information of the movable platform and the user device. Constraint modes that can be selected may include: a zero-velocity constraint mode, a zero angular velocity constraint mode, a gravity constraint mode for the target device, a gravity constraint mode for the user device, a relative gravity constraint mode for both the user device and the target device, a movable platform constraint mode.

In S8 described above, a corresponding actual observation and predicted observation may be obtained based on the constraint mode selected in the above S7, and a residual (e.g., the first error, the second error, or the third error above) between the actual observation and the predicted observation may be calculated, and the predicted state vector may be corrected based on the residual, to obtain the corrected state vector.

The various constraint modes are described below.

(1) Relative position constraint

Through S2 described above, $p_{vg}^{predict}$ as the predicted relative position may be obtained. Through S6 described above, $p_{vg}^{obs}$ as the observed relative position may be obtained. In S8 described above, by calculating a difference between $p_{vg}^{obs}$ and $p_{vg}^{predict}$, $p_{vg}^{error}$ as the first error may be obtained.

When a user uses a user device on a movable platform, an amount of positional change of the user relative to the movable platform is often not large. There is a positive correlation among a moving distance S of the movable platform in the world coordinate system, $p_{vg}^{error}$, and $R_{vg}^{error}$ as an error corresponding to a relative orientation dimension (which may also be referred to as a relative orientation error). Moreover, the greater the moving distance S of the movable platform in the world coordinate system, the greater the correlation between $p_{vg}^{error}$ and $R_{vg}^{error}$. Specifically, reference may be made to Fig. 7.

Since $p_{vg}^{error}$ is positively correlated with $R_{vg}^{error}$, $R_{vg}^{error}$ may be inferred from $p_{vg}^{error}$. Based on $R_{vg}^{error}$, a correction amount corresponding to the relative orientation dimension may be determined. By superimposing the correction amount corresponding to the relative orientation dimension with $R_{vg}^{predict}$, correction of $R_{vg}^{predict}$ may be achieved. In a similar manner, correction of other parameters in the predicted state vector may also be achieved, and a corrected state vector may be obtained thereby.

(2) Zero velocity constraint mode

Through S2 described above, $v_v^{predict}$ as the second predicted velocity may be obtained. If the motion information obtained in S4 described above indicates that the movable platform is in a stationary state, the movable platform may be considered to have a velocity of zero in the world coordinate system. $v_v^{obs}$ as the observed velocity of the target device in the world coordinate system is zero, and the constraint mode selected in S7 described above may be the zero-velocity constraint mode. In S8 described above, by calculating a difference between $v_v^{obs}$ and $v_v^{predict}$, $v_v^{error}$ as the second error may be obtained.

It may be understood that $v_v^{predict}$ is associated with $bias_v^{acc-predict}$ as the second predicted acceleration bias, $bias_v^{acc-predict}$ is associated with $p_{vg}^{predict}$ and $v_{vg}^{predict}$, and $p_{vg}^{predict}$ is associated with $R_{vg}^{predict}$. Using these associations, $R_{vg}^{error}$ may be inferred from $v_v^{error}$. Subsequently, correction of the predicted state vector may be achieved in a similar manner as in the above description related to the relative position constraint.

(3) Zero angular velocity constraint mode

Through S0 described above, $\omega_v^{imu}$ as the angular velocity of the target device in the world coordinate system may be obtained. If the motion information obtained in S4 described above indicates that the movable platform is in a stationary state, the movable platform may be considered to have an angular velocity of zero in the world coordinate system. $\omega_v^{obs}$ as the observed angular velocity of the target device in the world coordinate system is zero. The constraint mode selected in S7 described above may be the zero angular velocity constraint mode. In S8 described above, by calculating a difference between $\omega_v^{obs}$ and a difference between $\omega_v^{imu}$ and $\omega_v^{error}$ as the second error may be obtained.

It may be understood that $\omega_v^{error}$ is associated with $bias_v^{gyro-predict}$, and $bias_v^{gyro-predict}$ is associated with $R_{vg}^{predict}$. Using these associations, $R_{vg}^{error}$ may be inferred from $\omega_v^{error}$. Subsequently, correction of the predicted state vector may be achieved in a similar manner as in the above description related to the relative position constraint.

(4) Gravity constraint mode for the target device

Through S0 described above, $a_v$ as the acceleration of the target device in the world coordinate system may be obtained. Through S2 described above, $R_v^{predict}$ as the second predicted orientation may be obtained. If the motion information obtained in S4 described above indicates that the movable platform is in a stationary state, a direction of an acceleration measured by the second inertial measurement unit may be considered to be a direction of gravity. The constraint mode selected in S7 described above may be the gravity constraint mode for the target device. In S8 described above, by calculating a difference between $a_v$ and $-R_v^{predict} \cdot g$, $g^{error}$ as the second error may be obtained.

It may be understood that $g^{error}$ is associated with $R_v^{predict}$ and $bias_v^{acc-predict}$, and $R_v^{predict}$ is associated with $bias_v^{gyro-predict}$ and $R_{vg}^{predict}$. Using these associations, $R_{vg}^{error}$ may be inferred from $g^{error}$. Subsequently, correction of the predicted state vector may be achieved in a similar manner as in the above description related to the relative position constraint.

(5) Gravity constraint mode for the user device

Through S1 described above, $a_g$ as the acceleration of the user device in the world coordinate system may be obtained. Through S2 described above, $R_v^{predict}$ as the second predicted orientation may be obtained. By multiplying $R_v^{predict}$ with $R_{vg}^{predict}$, $R_g^{predict}$ as the predicted orientation of the user device in the world coordinate system may be obtained. If the motion information obtained in S4 described above indicates that the movable platform is in a stationary state, and the motion information obtained in S5 described above indicates that the user device is in a stationary state, a direction of an acceleration measured by the first inertial measurement unit may be considered to be the direction of gravity. The constraint mode selected in S7 described above may be the gravity constraint mode for the user device. In S8 described above, by calculating a difference between $a_g$ and $-R_g^{predict} \cdot g$, $g^{error}$ as the second error may be obtained.

It may be understood that $g^{error}$ is directly associated with $R_{vg}^{error}$. Using the association, $R_{vg}^{error}$ may be inferred from $g^{error}$. Subsequently, correction of the predicted state vector may be achieved in a similar manner as in the above description related to the relative position constraint.

(6) Relative gravity constraint mode for both the user device and the target device

Through S0 described above, $a_v$ as the acceleration of the target device in the world coordinate system may be obtained. Through S1 described above, $a_g$ as the acceleration of the user device in the world coordinate system may be obtained. If the motion information obtained in S4 described above indicates that the movable platform is in a stationary state, and the motion information obtained in S5 described above indicates the user device is in a stationary state, $a_v$ may be considered to be theoretically in the same direction (i.e., the direction of gravity) as $a_g$. The constraint mode selected in S7 described above may be the relative gravity constraint mode for both the user device and the target device. In S8 described above, by calculating a difference between $a_g$ and $R_{vg}^{predict} a_v$, $dg^{error}$ as the second error may be obtained.

It may be understood that $dg^{error}$ is directly associated with $R_{vg}^{error}$. Using the association, $R_{vg}^{error}$ may be inferred from $dg^{error}$. Subsequently, correction of the predicted state vector may be achieved in a similar manner as in the above description related to the relative position constraint.

(7) movable platform constraint mode

Through S2 described above, $p_v^{predict}$, $R_v^{predict}$, $V_v^{predict}$, which are sequentially the second predicted position, the second predicted orientation, and the second predicted velocity of the target device in the world coordinate system, may be obtained. By performing calculations using data obtained in S4, $p_v^{obs}$ as the observed position, $R_v^{obs}$ as the observed orientation, and $V_v^{obs}$ as the observed velocity may be determined. If the motion information obtained in S4 described above indicates that the movable platform is in a motion state, it may be determined that the movable platform is in a state in which information such as its position, orientation, velocity, etc. may be obtained. The constraint mode selected in S7 described above may be the movable platform constraint mode. In S8 described above, by calculating a difference between $p_v^{obs}$ and $p_v^{predict}$, or calculating a difference between $R_v^{obs}$ and $R_v^{predict}$, or calculating a difference between $V_v^{obs}$ and $V_v^{predict}$, the third error may be obtained. Based on the third error, $R_{vg}^{error}$ may be inferred. Subsequently, correction of the predicted state vector may be achieved in a similar manner as in the above description related to the relative position constraint.

In some embodiments, the relative position constraint may be a constraint mode used by default. The relative position constraint mode operates regardless of the states of the target device and the user device, to enable determination of the first error so that the first error is used for correction of the predicted state vector. The other constraint modes are optional constraints. It can be decided whether to utilize the other constraint modes and which of the other constraint modes to utilize specifically, depending on the states of the target device and the user device.

In some implementations, it is also possible not to set the relative position constraint as a constraint mode used by default. In this case, with reference to the states of the target device and the user device, or other factors, a suitable constraint mode may be selected from all possible constraint modes introduced in embodiments of the present disclosure, and the selected constraint mode may be utilized.

In some implementations, according to actual needs, all possible constraint modes introduced in embodiments of the present disclosure may be used in combination. For example, the zero velocity constraint mode and the zero angular velocity constraint mode may be used simultaneously. As another example, the relative position constraint mode and the movable platform constraint mode may be used simultaneously.

It is to be noted that all the above method embodiments pertain to correction of a relative orientation between a user device and a target device, but the scope of application of embodiments of the present disclosure is not limited to this. Utilizing the concept in embodiments of the present disclosure, it is possible to correct a relative orientation between any two devices which are both provided with an inertial measurement unit, according to actual needs.

In addition, the observed positions involved in embodiments of the present disclosure may also be referred to as observed translations, and the predicted positions may also be referred to as prediction translations.

Any method for correcting a relative orientation between a user device and a target device provided in embodiments of the present disclosure may be executed by any suitable device having data processing capabilities, including, but not limited to a terminal device and a server, etc. Alternatively, any method for correcting a relative orientation between a user device and a target device provided in embodiments of the present disclosure may be executed by a processor. For example, the processor executes any method for correcting a relative orientation between a user device and a target device mentioned in embodiments of the present disclosure, by invoking corresponding instructions stored in a memory. This will not be described here.

Embodiments of the present disclosure further provide a method for determining a relative orientation between a first device and a second device, the first device being provided with a first inertial measurement unit, and the second device being provided with a second inertial measurement unit, the method including:

obtaining a state vector, data acquired by the first inertial measurement unit, and data acquired by the second inertial measurement unit, wherein the state vector includes a relative position, a relative orientation, and a relative velocity between the first device and the second device, a first angular velocity bias of the first inertial measurement unit, a first acceleration bias of the first inertial measurement unit, a second angular velocity bias of the second inertial measurement unit, and a second acceleration bias of the second inertial measurement unit;

determining a predicted state vector, the predicted state vector including at least one of the following two configurations: a predicted relative position, a predicted relative orientation, and a predicted relative velocity between the first device and the second target device; and a first predicted position, a first predicted orientation, and a first predicted velocity of the first device in a world coordinate system, and a second predicted position, a second predicted orientation, and a second predicted velocity of the second device in the world coordinate system;

obtaining an observed relative position between the first device and the second device; wherein the observed relative position is preset data;

determining a first error between the observed relative position and a predicted relative position, wherein the predicted relative position satisfies one of the following two conditions: the predicted relative position is the predicted relative position in the predicted state vector, and the predicted relative position is determined based on the first predicted position and the second predicted position in the predicted state vector; and
correcting the predicted state vector using the first error to obtain a corrected relative orientation between the first device and the second device.

Embodiments of the present disclosure further provide a method for correcting a relative orientation between a first device and a second device, the first device being provided with a first inertial measurement unit, and the second device being provided with a second inertial measurement unit. The method includes:

obtaining a predicted state vector; wherein the predicted state vector is determined based on data acquired by the first inertial measurement unit and data acquired by the second inertial measurement unit, the predicted state vector including at least one of the following two configurations: a predicted relative position, a predicted relative orientation, and a predicted relative velocity between the first device and the second device, wherein the predicted relative velocity is obtained based on a state estimation equation satisfying lever-arm constraint conditions; and a first predicted position, a first predicted orientation, and a first predicted velocity of the first device in a world coordinate system, and a second predicted position, a second predicted orientation, and a second predicted velocity of the second device in the world coordinate system;
obtaining an observed relative position between the first device and the second device, wherein the observed relative position is determined based on non-visual data;
determining a first error between the observed relative position and a predicted relative position, wherein the predicted relative position satisfies one of the following two conditions: the predicted relative position is the predicted relative position in the predicted state vector, and the predicted relative position is determined based on the first predicted position and the second predicted position in the predicted state vector; and
correcting the predicted state vector using the first error to obtain a corrected relative orientation between the first device and the second device.

Optionally, an inertial measurement unit corresponding to a reference coordinate system is the first inertial measurement unit, and the state estimation equation may include a first equation:

$$
\begin{aligned}
{}^{I_1}\dot{\hat{\mathbf{v}}}_{I_2}(t) = {}& \mathbf{C}({}^{I_1}\hat{\mathbf{q}}_{I_2}(t))\,{}^{I_2}\hat{\mathbf{a}}(t) - {}^{I_1}\hat{\mathbf{a}}(t) \\
& - 2\,{}^{I_1}\hat{\boldsymbol{\omega}}(t) \times {}^{I_1}\hat{\mathbf{v}}_{I_2}(t) \\
& - {}^{I_1}\hat{\boldsymbol{\omega}}(t) \times ({}^{I_1}\hat{\boldsymbol{\omega}}(t) \times {}^{I_1}\hat{\mathbf{p}}_{I_2}(t)) - {}^{I_1}\dot{\hat{\boldsymbol{\omega}}}(t) \times {}^{I_1}\hat{\mathbf{p}}_{I_2}(t)
\end{aligned}
$$

Optionally, an inertial measurement unit corresponding to the reference coordinate system is the first inertial measurement unit, and the state estimation equation may include a second equation:

$$
{}^{I_1}\dot{\hat{\mathbf{p}}}_{I_2}(t) = {}^{I_1}\hat{\mathbf{v}}'_{I_2}(t) - {}^{I_1}\hat{\boldsymbol{\omega}}(t) \times {}^{I_1}\hat{\mathbf{p}}_{I_2}(t)
$$

$$
{}^{I_1}\dot{\hat{\mathbf{v}}}'_{I_2}(t) = \mathbf{C}({}^{I_1}\hat{\mathbf{q}}_{I_2}(t))\,{}^{I_2}\hat{\mathbf{a}}(t) - {}^{I_1}\hat{\mathbf{a}}(t) - {}^{I_1}\hat{\boldsymbol{\omega}}(t) \times {}^{I_1}\hat{\mathbf{v}}'_{I_2}(t)
$$

wherein ${}^{I_1}\hat{v}'_{I_2}(t)$ represents a projection result obtained by projecting a relative velocity between the second device and the first device in an inertial coordinate system to the reference coordinate system.
The inertial measurement unit corresponding to the reference coordinate system may be understood as the inertial measurement unit of the first device, i.e. the target device.
Optionally, a state vector of the state estimation equation may be expressed in the following form:

$$
\mathbf{x} = \begin{bmatrix} {}^{I_1}\mathbf{p}_{I_2}^T & {}^{I_1}\mathbf{v}_{I_2}^T & {}^{I_1}\mathbf{q}_{I_2}^T & \mathbf{b}_{g_1}^T & \mathbf{b}_{g_2}^T & \mathbf{b}_{a_1}^T & \mathbf{b}_{a_2}^T \end{bmatrix}^T
$$

Optionally, if the state estimation equation includes the first equation described above, then in addition to the first equation, the state estimation equation may further include the following equation:

$$^{I_1}\dot{\mathbf{p}}_{I_2}(t) = {}^{I_1}\hat{\mathbf{v}}_{I_2}(t)$$

$$^{I_1}\dot{\hat{\mathbf{q}}}_{I_2}(t) = \frac{1}{2}({}^{I_1}\hat{\mathbf{q}}_{I_2}(t) \otimes {}^{I_2}\bar{\boldsymbol{\omega}}(t) - {}^{I_2}\bar{\boldsymbol{\omega}}(t) \otimes {}^{I_1}\hat{\mathbf{q}}_{I_2}(t))$$

$$\dot{\hat{\mathbf{b}}}_{g_1}(t) = \mathbf{0}_{3\times1}, \qquad \dot{\hat{\mathbf{b}}}_{g_2}(t) = \mathbf{0}_{3\times1}$$

$$\dot{\hat{\mathbf{b}}}_{a_1}(t) = \mathbf{0}_{3\times1}, \qquad \dot{\hat{\mathbf{b}}}_{a_2}(t) = \mathbf{0}_{3\times1}$$

Optionally, if the state estimation equation includes the second equation described above, then in addition to including the second equation, the state estimation equation may further include the following equation:

$$^{I_1}\dot{\hat{\mathbf{q}}}_{I_2}(t) = \frac{1}{2}({}^{I_1}\hat{\mathbf{q}}_{I_2}(t) \otimes {}^{I_2}\bar{\boldsymbol{\omega}}(t) - {}^{I_2}\bar{\boldsymbol{\omega}}(t) \otimes {}^{I_1}\hat{\mathbf{q}}_{I_2}(t))$$

$$\dot{\hat{\mathbf{b}}}_{g_1}(t) = \mathbf{0}_{3\times1}, \qquad \dot{\hat{\mathbf{b}}}_{g_2}(t) = \mathbf{0}_{3\times1}$$

$$\dot{\hat{\mathbf{b}}}_{a_1}(t) = \mathbf{0}_{3\times1}, \qquad \dot{\hat{\mathbf{b}}}_{a_2}(t) = \mathbf{0}_{3\times1}$$

Exemplary apparatus

Fig. 8 is a schematic structural diagram of an apparatus for correcting the relative orientation between a user device and a target device provided in an exemplary embodiment of the present disclosure. The user device is provided with a first inertial measurement unit, and the target device is provided with a second inertial measurement unit. The apparatus shown in Fig. 8 includes a first obtaining module 820, a second obtaining module 840, a first determination module 860, and a correction module 880.

The first obtaining module 820 is configured to obtain a predicted state vector, wherein the predicted state vector is determined based on data acquired by the first inertial measurement unit, and data acquired by the second inertial measurement unit, and the predicted state vector includes at least one of the following two configurations: a predicted relative position, a predicted relative orientation, and a predicted relative velocity between the user device and the target device; and a first predicted position, a first predicted orientation, and a first predicted velocity of the user device in a world coordinate system, and a second predicted position, a second predicted orientation, and a second predicted velocity of the target device in the world coordinate system; the second obtaining module 840 is configured to obtain an observed relative position between the user device and the target device, wherein the observed relative position is determined based on non-visual data; the first determination module 860 is configured to determine a first error between the observed relative position and a predicted relative position, wherein the predicted relative position satisfies one of the following two conditions: the predicted relative position is the predicted relative position in the predicted state vector, and the predicted relative position is determined based on the first predicted position and the second predicted position in the predicted state vector; and the correction module 880 is configured to correct the predicted state vector using the first error to obtain a corrected relative orientation between the user device and the target device.

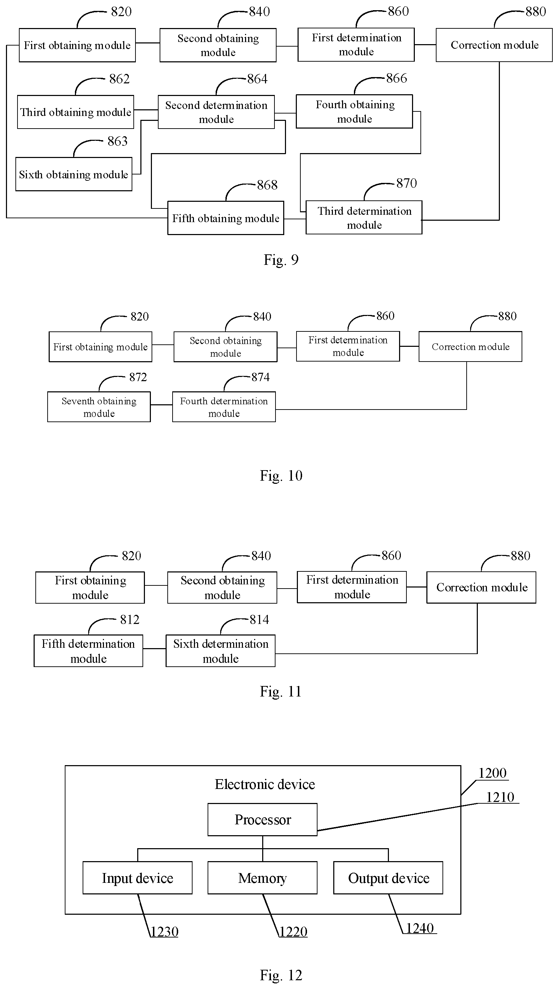

In some optional examples, as shown in Fig. 9, the apparatus further includes: a third obtaining module 862 configured to obtain first motion information of the target device in the world coordinate system; a second determination module 864 configured to determine a target constraint mode based on the first motion information; a fourth obtaining module 866 configured to obtain target observation data corresponding to the target constraint mode, wherein the target observation data is determined based on non-visual data, and the target observation data includes observation data of at least one of the user device and the target device in the world coordinate system; a fifth obtaining module 868 configured to, based on the predicted state vector, obtain target prediction data corresponding to the target constraint mode, wherein the target prediction data includes prediction data, in the world coordinate system, of a device to which the target observation data belongs; a third determination module 870 configured to determine a second error between the target observation data and the target prediction data; and a correction module 880 specifically configured to correct the predicted state vector using the first error and the second error.

In some optional examples, the second determination module 864 is specifically configured to: in response to the first motion information indicating the target device being in a stationary state, determine that the target constraint mode is a first constraint mode, wherein in response to the target constraint mode being the first constraint mode, the target observation data includes a preset observed velocity of the target device in the world coordinate system, the preset observed velocity being zero, and the target prediction data includes a second predicted velocity.

In some optional examples, the predicted state vector further includes at least one of: a first predicted angular velocity bias of the first inertial measurement unit; a first predicted acceleration bias of the first inertial measurement unit; a second predicted angular velocity bias of the second inertial measurement unit; and a second predicted acceleration bias of the second inertial measurement unit.

In some optional examples, the second determination module 864 is specifically configured to: in response to the first motion information indicating the target device being in a stationary state, determine that the target constraint mode is a second constraint mode, wherein in response to the target constraint mode being the second constraint mode, the target observation data includes a preset observed angular velocity of the target device in the world coordinate system, the preset observed angular velocity being zero, and the target prediction data includes a difference between an angular velocity of the target device in the world coordinate system and the second predicted angular velocity bias, the angular velocity of the target device in the world coordinate system being acquired by the second inertial measurement unit.

In some optional examples, the second determination module 864 is specifically configured to: in response to the first motion information indicating the target device being in a stationary state, determine that the target constraint mode is a third constraint mode, wherein in response to the target constraint mode being the third constraint mode, the target observation data includes an acceleration of the target device in the world coordinate system, which is acquired by the second inertial measurement unit, and the target prediction data includes an acceleration of the target device in the world coordinate system, which is calculated using the second predicted orientation and a gravitational acceleration in the world coordinate system.

In some optional examples, as shown in Fig. 9, the apparatus further includes: a sixth obtaining module 863 configured to obtain second motion information of the user device in the world coordinate system; and a second determination module 864 specifically configured to determine the target constraint mode based on the first motion information and the second motion information.

In some optional examples, the second determination module 864 is specifically configured to: in response to the first motion information indicating the target device being in a stationary state and the second motion information indicating the user device being in a stationary state, determine that the target constraint mode is a fourth constraint mode, wherein in response to the target constraint mode being the fourth constraint mode, the target observation data includes an acceleration of the user device in the world coordinate system, which is acquired by the first inertial measurement unit, and the target prediction data includes an acceleration of the user device in the world coordinate system, which is calculated using the predicted relative orientation, the second predicted orientation, and a gravitational acceleration in the world coordinate system.

In some optional examples, the second determination module 864 is specifically configured to: in response to the first motion information indicating the target device being in a stationary state and the second motion information indicating the user device being in a stationary state, determine that the target constraint mode is a fifth constraint mode, wherein in response to the target constraint mode being the fifth constraint mode, the target observation data includes an acceleration of the user device in the world coordinate system, which is acquired by the first inertial measurement unit, and the target prediction data includes an acceleration of the user device in the world coordinate system, which is calculated using the predicted relative orientation and an acceleration of the target device in the world coordinate system that is acquired by the second inertial measurement unit.

In some optional examples, the second determination module 864 is specifically configured to: in response to the first motion information indicating the target device being in a motion state, determine that the target constraint mode is a sixth constraint mode, wherein in response to the target constraint mode being the sixth constraint mode, the target observation data includes at least one of an observed position, an observed orientation, and an observed velocity of the target device in the world coordinate system, and the target prediction data includes at least one of the second predicted position, the second predicted orientation, and the second predicted velocity, and wherein the target observation data and the target prediction data include the same type of parameter; the target observation data is determined based on data acquired by at least one type of the following motion sensors provided on a movable platform: a wheel odometer, and a positioning sensor; and the target device satisfies one of the following two conditions: the target device is integrated into the movable platform, and the target device is removably fixed to the movable platform.

In some optional examples, the target device satisfies one of the following two conditions: the target device is integrated into a movable platform, and the target device is removably fixed to the movable platform; the first motion condition information is determined based on data acquired by at least one type of the following motion sensors: a wheel odometer, a positioning sensor, a gear position sensor, a brake signal sensor, and a target inertial measurement unit; the wheel odometer, the positioning sensor, the gear position sensor, and the brake signal sensor may all be provided on the movable platform; in response to the target device being integrated in the movable platform, the target inertial measurement unit is the second inertial measurement unit; and in response to the target device being removably fixed to the movable platform, the target inertial measurement unit is one of the following two: the second inertial measurement unit, an inertial measurement unit different from the second inertial measurement unit.

In some optional examples, the target device is provided with a first wireless positioning device; the user device is provided with a second wireless positioning device paired with the first wireless positioning device; and the observed relative position is determined through collaborative operation of the first wireless positioning device and the second wireless positioning device.

In some optional examples, as shown in Fig. 10, the apparatus further includes: a seventh obtaining module 872 configured to obtain an observed relative orientation between the user device and the target device; wherein the observed relative orientation is determined through collaborative operation of the first wireless positioning device and the second wireless positioning device; a fourth determination module 874 configured to determine a third error between the observed relative orientation and the predicted relative orientation; and a correction module 880 specifically configured to correct the predicted state vector using the first error and the third error.

In some optional examples, the target device satisfies one of the following two conditions: the target device is integrated into a movable platform, and the target device is removably fixed to the movable platform; and the second obtaining module 840 is specifically configured to perform any one of the following operations: determining the observed relative position based on a preset position in a platform coordinate system of the movable platform; determining the observed relative position based on position information in the platform coordinate system of the movable platform input by a user; and determining the observed relative position based on a position where a target connection interface is located, wherein the target connection interface is an interface provided on the movable platform for connecting to the user device.

In some optional examples, the target device satisfies one of the following two conditions: the target device is integrated into a movable platform, and the target device is removably fixed to the movable platform; and as shown in Fig. 11, the apparatus further includes: a fifth determination module 812 configured to determine a platform type of the movable platform; a sixth determination module 814 configured to determine an initial covariance matrix matched with the platform type; and a correction module 880 specifically configured to correct the predicted state vector using a predicted covariance matrix corresponding to the predicted state vector and the first error, wherein the predicted state vector and the predicted covariance matrix are both associated with the initial covariance matrix.

In some optional examples, the user device is a head-mounted display device, and the apparatus further includes: a first processing module configured to, based on the corrected relative orientation, perform at least one of the following processing on a virtual image displayed through the head-mounted display device: rendering, adjustment, and control.

In some optional examples, the user device is a controller, and the target device is a head-mounted display device, and the apparatus further includes: a first control module configured to control a virtual image displayed through the head-mounted display device based on the corrected relative orientation.

In some optional examples, the user device includes a head-mounted display device and a controller, and the target device satisfies one of the following two conditions: the target device is integrated into a movable platform, and the target device is removably fixed to the movable platform; and the apparatus further includes: a second processing module configured to, based on a corrected relative orientation between the head-mounted display device and the target device, perform at least one of the following processing on a virtual image displayed through the head-mounted display device: rendering, adjustment, and control; and a second control module configured to, based on a corrected relative orientation between the controller and the target device, control the virtual image displayed through the head-mounted display device.

In the apparatus of the present disclosure, the various optional embodiments, optional implementations, and optional examples disclosed above can all be flexibly selected and combined as needed to achieve corresponding functions and effects, which will not be listed here.

Exemplary electronic device

An electronic device according to an embodiment of the present disclosure will be described below with reference to Fig. 12. The electronic device may be either or both of a first device and a second device, or a stand-alone device different therefrom. The stand-alone device may communicate with the first device and the second device to receive acquired input signals therefrom.

Fig. 12 illustrates a block diagram of an electronic device 1200 according to an embodiment of the present disclosure.

As shown in Fig. 12, the electronic device 1200 includes one or more processors 1210 and a memory 1220.

The processor 1210 may be a central processing unit (CPU) or other form of processing unit having data processing capabilities and/or instruction execution capabilities, and may control other components in the electronic device 1200 to perform desired functions.

The memory 1220 may include one or more computer program products. The computer program products may include various forms of computer-readable storage medium, such as a volatile memory and/or a non-volatile memory. The volatile memory may, for example, include random access memory (RAM) and/or a cache memory (cache), etc. The non-volatile memory may, for example, include a read-only memory (ROM), a hard disk, a flash memory, etc. One or more computer program instructions may be stored on the computer-readable storage medium, and the processor 1210 may execute the program instructions to implement the method for correcting a relative orientation between a user device and a target device in various embodiments of the present disclosure described above and/or other desired functions. Various contents such as input signals, signal components, noise components, etc. may also be stored in the computer-readable storage medium.

In an example, the electronic device 1200 may further include input device 1230 and output device 1240. The components are interconnected via a bus system and/or other form of connecting mechanisms (not shown).

For example, in the case where the electronic device 1200 is a first device or a second device, the input device 1230 may be a microphone or a microphone array. In the case where the electronic device 1200 is a stand-alone device, the input device 1230 may be a communication network connector configured to receive acquired input signals from the first device and the second device.

In addition, the input device 1230 may also include, for example, a keyboard, a mouse, and the like.

The output device 1240 may output various information to the outside. The output device 1240 may include, for example, a display, a speaker, a printer, and a communications network and remote output device connected thereto, and so on.

Of course, for simplicity, only some of components of the electronic device 1200 relevant to the present disclosure are shown in Fig. 12, while components such as buses, input/output interfaces, and the like are omitted. In addition, depending on a specific application, the electronic device 1200 may further include any other appropriate components.

Exemplary computer program product and computer-readable storage medium

In addition to the method and device described above, embodiments of the present disclosure may also be a computer program product including computer program instructions. The computer program instructions, when executed by a processor, cause the processor to execute the steps of the method for correcting a relative orientation between a user device and a target device according to various embodiments of the present disclosure described in the above "Exemplary method" section of this specification.

The computer program product may use any combination of one or more programming languages to write program code for performing operations of the embodiments of the present disclosure. The programming languages include an object-oriented programming language such as Java or C++, and also include a conventional procedural programming language, such as "C" language or a similar programming language. The program code may be executed entirely on a user's computing device, partly on a user's device, as an independent software package, partly on a user's computing device and partly on a remote computing device, or entirely on a remote computing device or server.

In addition, embodiments of the present disclosure may also be a computer-readable storage medium configured to store computer program instructions. The computer program instructions, when executed by a processor, cause the processor to execute the steps of the method for correcting a relative orientation between a user device and a target device according to various embodiments of the present disclosure described in the above "Exemplary method" section of this specification.

The computer-readable storage medium may be any combination of one or more readable media. The readable medium may be a readable signal medium or a readable storage medium. The readable storage medium may include, for example, but is not limited to, an electronic, magnetic, optical, electromagnetic, infrared, or semiconductor system, apparatus or device, or any combination thereof. More specific examples (a non-exhaustive list) of the readable storage medium include: an electrical connection with one or more conducting wires, a portable disk, a hard disk, a random access memory (RAM), a read only memory (ROM), an erasable programmable read only memory (EPROM or flash memory), an optical fiber, a portable compact disk read only memory ((CD-ROM), an optical storage device, a magnetic storage device, or any suitable combination thereof.

Basic principles of the present disclosure are described above in conjunction with specific embodiments. However, it is to be noted that the advantages, strengths, effects, and the like mentioned in the present disclosure are only examples and not limitations, and these advantages, strengths, effects, and the like should not be regarded as indispensable for the embodiments of the present disclosure. In addition, the specific details in the above disclosure are only for the purposes of exemplification and ease of understanding, and are not limiting. The above details do not constrain the present disclosure to be necessarily implemented with the above specific details.

The embodiments in the specification are described in a progressive manner. Each embodiment focuses on differences from other embodiments. For the same and similar parts between the embodiments, reference can be made to each other. A system embodiment, which substantially corresponds to a method embodiment, is described relatively simply, and for its relevant parts, reference may be made to parts of description of the method embodiment.

Block diagrams of devices, apparatuses, equipment, and systems involved in the present disclosure are only used as illustrative examples and are not intended to require or imply that they are necessarily connected, arranged, or configured in the manner illustrated in the block diagrams. As will be recognized by those skilled in the art, these devices, apparatuses, equipment, and systems may be connected, arranged, or configured in any manner. Words such as "include", "comprise", "have", etc. are open-ended terms, mean "include but not limited to" and may be used interchangeably. The words "or" and "and" as used herein refer to the words "and/or", and may be used interchangeably therewith unless the context clearly indicates otherwise. The word "such as" as used herein refers to the phrase "such as, but not limited to", and may be used interchangeably therewith.

The method and apparatus of the present disclosure may be implemented in many ways. For example, the method and apparatus of the present disclosure may be implemented by software, hardware, firmware, or any combination of software, hardware, and firmware. The above order for the steps of the described method is only for an illustrative purpose, and the steps of the methods of the present disclosure are not limited to the order specifically described above, unless otherwise specified. Additionally, in some embodiments, the present disclosure may also be implemented as programs recorded in a recording medium. The programs include machine-readable instructions for implementing the method according to the present disclosure. Thus, the present disclosure also covers a recording medium that stores programs for performing the method according to the present disclosure.

It is also to be noted that in the apparatus, device, and method of the present disclosure, the components or steps are decomposable and/or recombinable. These decompositions and/or recombinations should be considered as equivalents of the present disclosure.

The above description of the disclosed aspects is provided to enable any person skilled in the art to carry out or use the present disclosure. Various modifications to these aspects are very apparent to those skilled in the art, and general principles defined herein may be applied to other aspects without departing from the scope of the present disclosure. Accordingly, the present disclosure is not intended to be limited to the aspects illustrated herein, but rather according to the broadest scope consistent with the principles and novel features disclosed herein.

The above description has been made for purposes of illustration and description. In addition, this description is not intended to limit the embodiments of the present disclosure to the forms disclosed herein. Although a plurality of example aspects and embodiments have been discussed above, certain variations, modifications, changes, additions, and sub-combinations thereof would occur to those skilled in the art.

## Claims

1. A method for correcting a relative orientation between a user device and a target device, the user device being provided with a first inertial measurement unit, the target device being provided with a second inertial measurement unit, the method comprising:

   obtaining a predicted state vector, wherein the predicted state vector is determined based on data acquired by the first inertial measurement unit and data acquired by the second inertial measurement unit, and the predicted state vector comprises at least one of following two configurations: a predicted relative position, a predicted relative orientation, and a predicted relative velocity between the user device and the target device; and a first predicted position, a first predicted orientation, and a first predicted velocity of the user device in a world coordinate system, and a second predicted position, a second predicted orientation, and a second predicted velocity of the target device in the world coordinate system;

   obtaining an observed relative position between the user device and the target device, wherein the observed relative position is determined based on non-visual data;

   determining a first error between the observed relative position and the predicted relative position, wherein the predicted relative position satisfies one of the following two conditions: the predicted relative position is the predicted relative position in the predicted state vector, and the predicted relative position is determined based on the first predicted position and the second predicted position in the predicted state vector; and

   correcting the predicted state vector using the first error to obtain a corrected relative orientation between the user device and the target device.

2. The method according to claim 1, wherein the method further comprises:

   obtaining first motion information of the target device in the world coordinate system;

   determining a target constraint mode based on the first motion information;

   obtaining target observation data corresponding to the target constraint mode, wherein the target observation data is determined based on non-visual data; and the target observation data comprises observation data of at least one of the user device and the target device in the world coordinate system;
based on the predicted state vector, obtaining target prediction data corresponding to the target constraint mode, wherein the target prediction data comprises prediction data, in the world coordinate system, of a device to which the target observation data belongs; and
determining a second error between the target observation data and the target prediction data; and
correcting the predicted state vector using the first error comprises:
correcting the predicted state vector using the first error and the second error.

3. The method according to claim 2, wherein determining a target constraint mode based on the first motion information comprises:

in response to the first motion information indicating the target device being in a stationary state, determining that the target constraint mode comprises a first constraint mode,
wherein in response to the target constraint mode comprising the first constraint mode, the target observation data comprises a preset observed velocity of the target device in the world coordinate system, the preset observed velocity being zero, and the target prediction data comprises the second predicted velocity.

4. The method according to claim 2 or 3, wherein the predicted state vector further comprises at least one of:

a first predicted angular velocity bias of the first inertial measurement unit;
a first predicted acceleration bias of the first inertial measurement unit;
a second predicted angular velocity bias of the second inertial measurement unit; and
a second predicted acceleration bias of the second inertial measurement unit,
wherein determining a target constraint mode based on the first motion information comprises:

in response to the first motion information indicating the target device being in a stationary state, determining that the target constraint mode comprises a second constraint mode,
wherein in response to the target constraint mode comprising the second constraint mode, the target observation data comprises a preset observed angular velocity of the target device in the world coordinate system, the preset observed angular velocity being zero, and the target prediction data comprises a difference between an angular velocity of the target device in the world coordinate system and the second predicted angular velocity bias, the angular velocity of the target device in the world coordinate system being acquired by the second inertial measurement unit.

5. The method according to any one of claims 2 to 4, wherein determining a target constraint mode based on the first motion information comprises:

in response to the first motion information indicating the target device being in a stationary state, determining that the target constraint mode comprises a third constraint mode,
wherein in response to the target constraint mode comprising the third constraint mode, the target observation data comprises an acceleration of the target device in the world coordinate system, which is acquired by the second inertial measurement unit, and the target prediction data comprises an acceleration of the target device in the world coordinate system, which is calculated using the second predicted orientation and a gravitational acceleration in the world coordinate system.

6. The method according to any one of claims 2 to 4, wherein before determining a target constraint mode based on the first motion information, the method further comprises:

obtaining second motion information of the user device in the world coordinate system; and
determining a target constraint mode based on the first motion information comprises:
determine the target constraint mode based on the first motion information and the second motion information.

7. The method according to claim 6, wherein determining the target constraint mode based on the first motion information and the second motion information comprises:

in response to the first motion information indicating the target device being in a stationary state and the second motion information indicating the user device being in a stationary state, determining that the target constraint mode comprises a fourth constraint mode,

wherein in response to the target constraint mode comprising the fourth constraint mode, the target observation data comprises an acceleration of the user device in the world coordinate system, which is acquired by the first inertial measurement unit, and the target prediction data comprises an acceleration of the user device in the world coordinate system, which is calculated using the predicted relative orientation, the second predicted orientation, and a gravitational acceleration in the world coordinate system.

8. The method according to claim 6, wherein determining the target constraint mode based on the first motion information and the second motion information comprises:

in response to the first motion information indicating the target device being in a stationary state and the second motion information indicating the user device being in a stationary state, determining that the target constraint mode comprises a fifth constraint mode,
wherein in response to the target constraint mode comprising the fifth constraint mode, the target observation data comprises an acceleration of the user device in the world coordinate system, which is acquired by the first inertial measurement unit, and the target prediction data comprises an acceleration of the user device in the world coordinate system, which is calculated using the predicted relative orientation and an acceleration of the target device in the world coordinate system that is acquired by the second inertial measurement unit.

9. The method according to claim 2, wherein determining a target constraint mode based on the first motion information comprises:

in response to the first motion information indicating the target device being in a motion state, determining that the target constraint mode comprises a sixth constraint mode,
wherein in response to the target constraint mode comprising the sixth constraint mode, the target observation data comprises at least one of an observed position, an observed orientation, and an observed velocity of the target device in the world coordinate system, and the target prediction data comprises at least one of the second predicted position, the second predicted orientation, and the second predicted velocity, and wherein the target observation data and the target prediction data comprise the same type of parameter; the target observation data is determined based on data acquired by at least one type of the following motion sensors provided on a movable platform: a wheel odometer, and a positioning sensor; and the target device satisfies one of the following two conditions: the target device is integrated into the movable platform, and the target device is removably fixed to the movable platform.

10. The method according to claims 2 to 9, wherein

the target device satisfies one of the following two conditions: the target device is integrated into a movable platform, and the target device is removably fixed to the movable platform;
the first motion information is determined based on data acquired by at least one type of the following motion sensors: a wheel odometer, a positioning sensor, a gear position sensor, a brake signal sensor, and a target inertial measurement unit; and
the wheel odometer, the positioning sensor, the gear position sensor, and the brake signal sensor are all provided on the movable platform, wherein in response to the target device being integrated in the movable platform, the target inertial measurement unit is the second inertial measurement unit, or in response to the target device being removably fixed to the movable platform, the target inertial measurement unit is one of the following two configurations: the second inertial measurement unit, an inertial measurement unit different from the second inertial measurement unit.

11. The method according to any one of claims 1 to 10, wherein

the target device is provided with a first wireless positioning device;
the user device is provided with a second wireless positioning device paired with the first wireless positioning device; and
the observed relative position is determined through collaborative operation of the first wireless positioning device and the second wireless positioning device; and
wherein the method further comprises:

obtaining an observed relative orientation between the user device and the target device, wherein the observed relative orientation is determined through collaborative operation of the first wireless positioning device and the second wireless positioning device; and

determining a third error between the observed relative orientation and the predicted relative orientation; and

correcting the predicted state vector using the first error comprises:

correcting the predicted state vector using the first error and the third error.

12. The method according to any one of claims 1 to 11, wherein the target device satisfies one of the following two conditions: the target device is integrated into a movable platform, and the target device is removably fixed to the movable platform;

obtaining an observed relative position between the user device and the target device comprises any one of:

obtaining preset data, wherein the non-visual data used to determine the observed relative position is the preset data;

determining the observed relative position based on a preset position in a platform coordinate system of the movable platform;

determining the observed relative position based on position information in the platform coordinate system of the movable platform input by a user; and

determining the observed relative position based on a position where a target connection interface is located, wherein the target connection interface is an interface provided on the movable platform for connecting to the user device.

13. The method according to any one of claims 1 to 11, wherein the target device satisfies one of the following two conditions: the target device is integrated into a movable platform, and the target device is removably fixed to the movable platform;

the method further comprises:

determining a platform type of the movable platform; and

determining an initial covariance matrix matched with the platform type; and

correcting the predicted state vector using the first error comprises:

correcting the predicted state vector using a predicted covariance matrix corresponding to the predicted state vector and the first error, wherein the predicted state vector and the predicted covariance matrix are both associated with the initial covariance matrix.

14. An electronic device, comprising:

a memory configured to store a computer program product; and

a processor configured to execute the computer program product stored in the memory, wherein the computer program product, when executed, implements the method for correcting a relative orientation between a user device and a target device according to any one of the preceding claims 1 to 13.

15. A computer-readable storage medium, configured to store computer program instructions, wherein the computer program instructions, when executed by a processor, implements the method for correcting a relative orientation between a user device and a target device according to any one of the preceding claims 1 to 13.

Obtaining a predicted state vector, wherein the predicted state vector is determined based on data acquired by a first inertial measurement unit and data acquired by a second inertial measurement unit, and the predicted state vector includes at least one of the following two configurations: a predicted relative position, a predicted relative orientation, and a predicted relative velocity between the user device and the target device; and a first predicted position, a first predicted orientation, and a first predicted velocity of the user device in a world coordinate system, and a second predicted position, a second predicted orientation, and a second predicted velocity of the target device in the world coordinate system — 120

Obtaining an observed relative position between the user device and the target device, wherein the observed relative position is determined based on non-visual data — 140

Determining a first error between the observed relative position and a predicted relative position, wherein the predicted relative position satisfies one of the following two conditions: the predicted relative position is the predicted relative position in the predicted state vector, and the predicted relative position is determined based on the first predicted position and the second predicted position in the predicted state vector — 160

Correcting the predicted state vector using the first error to obtain a corrected relative orientation between the user device and the target device — 180

Fig. 1

Obtaining a predicted state vector, wherein the predicted state vector is determined based on data acquired by a first inertial measurement unit and data acquired by a second inertial measurement unit, and the predicted state vector includes at least one of the following two configurations: a predicted relative position, a predicted relative orientation, and a predicted relative velocity between the user device and the target device; and a first predicted position, a first predicted orientation, and a first predicted velocity of the user device in a world coordinate system, and a second predicted position, a second predicted orientation, and a second predicted velocity of the target device in the world coordinate system — 120

Obtaining an observed relative position between the user device and the target device, wherein the observed relative position is determined based on non-visual data — 140

Determining a first error between the observed relative position and a predicted relative position, wherein the predicted relative position satisfies one of the following two conditions: the predicted relative position is the predicted relative position in the predicted state vector, and the predicted relative position is determined based on the first predicted position and the second predicted position in the predicted state vector — 160

Obtaining first motion information of the target device in the world coordinate system — 162

Determining a target constraint mode based on the first motion information — 164

Obtaining target observation data corresponding to the target constraint mode, wherein the target observation data is determined based on non-visual data; and the target observation data includes observation data of at least one of the user device and the target device in the world coordinate system — 166

Based on the predicted state vector, obtaining target prediction data corresponding to the target constraint mode, wherein the target prediction data includes prediction data, in the world coordinate system, of a device to which the target observation data belongs — 168

Determining a second error between the target observation data and the target prediction data — 170

Correcting the predicted state vector using the first error and the second error — 180 / 1802

Fig. 2

Obtaining a predicted state vector, wherein the predicted state vector is determined based on data acquired by a first inertial measurement unit and data acquired by a second inertial measurement unit, and the predicted state vector includes at least one of the following two types: a predicted relative position, a predicted relative orientation, and a predicted relative velocity between the user device and the target device; and a first predicted position, a first predicted orientation, and a first predicted velocity of the user device in a world coordinate system, and a second predicted position, a second predicted orientation, and a second predicted velocity of the target device in the world coordinate system — 120

Obtaining an observed relative position between the user device and the target device, wherein the observed relative position is determined based on non-visual data — 140

Determining a first error between the observed relative position and a predicted relative position, wherein the predicted relative position satisfies one of the following two conditions: the predicted relative position is the predicted relative position in the predicted state vector, and the predicted relative position is determined based on the first predicted position and the second predicted position in the predicted state vector — 160

Obtaining first motion information of the target device in the world coordinate system — 162

Obtaining second motion information of the user device in the world coordinate system — 163

Determining the target constraint mode based on the first motion information and the second motion information — 164 / 1642

Obtaining target observation data corresponding to the target constraint mode, wherein the target observation data is determined based on non-visual data; and the target observation data includes observation data of at least one of the user device and the target device in the world coordinate system — 166

Based on the predicted state vector, obtaining target prediction data corresponding to the target constraint mode, wherein the target prediction data includes prediction data, in the world coordinate system, of a device to which the target observation data belongs — 168

Determining a second error between the target observation data and the target prediction data — 170

Correcting the predicted state vector using the first error and the second error — 180 / 1802

Fig. 3

Obtaining a predicted state vector, wherein the predicted state vector is determined based on data acquired by a first inertial measurement unit and data acquired by a second inertial measurement unit, and the predicted state vector includes at least one of the following two types: a predicted relative position, a predicted relative orientation, and a predicted relative velocity between the user device and the target device; and a first predicted position, a first predicted orientation, and a first predicted velocity of the user device in a world coordinate system, and a second predicted position, a second predicted orientation, and a second predicted velocity of the target device in the world coordinate system — 120

Obtaining an observed relative position between the user device and the target device, wherein the observed relative position is determined based on non-visual data — 140

Determining a first error between the observed relative position and a predicted relative position, wherein the predicted relative position satisfies one of the following two conditions: the predicted relative position is the predicted relative position in the predicted state vector, and the predicted relative position is determined based on the first predicted position and the second predicted position in the predicted state vector — 160

Obtaining an observed relative orientation between the user device and the target device, wherein the observed relative orientation is determined through collaborative operation of the first wireless positioning device and the second wireless positioning device — 172

Determining a third error between the observed relative orientation and the predicted relative orientation — 174

Correcting the predicted state vector using the first error and the third error — 180, 1804

Fig. 4

Determining a platform type of the mobile platform — 110

Determining an initial covariance matrix matched with the platform type — 112

Obtaining a predicted state vector, wherein the predicted state vector is determined based on data acquired by a first inertial measurement unit and data acquired by a second inertial measurement unit, and the predicted state vector includes at least one of the following two types: a predicted relative position, a predicted relative orientation, and a predicted relative velocity between the user device and the target device; and a first predicted position, a first predicted orientation, and a first predicted velocity of the user device in a world coordinate system, and a second predicted position, a second predicted orientation, and a second predicted velocity of the target device in the world coordinate system — 120

Obtaining an observed relative position between the user device and the target device, wherein the observed relative position is determined based on non-visual data — 140

Determining a first error between the observed relative position and a predicted relative position, wherein the predicted relative position satisfies one of the following two conditions: the predicted relative position is the predicted relative position in the predicted state vector, and the predicted relative position is determined based on the first predicted position and the second predicted position in the predicted state vector — 160

Correcting the predicted state vector using a predicted covariance matrix corresponding to the predicted state vector and the first error, wherein the predicted state vector and the predicted covariance matrix are both associated with the initial covariance matrix — 180 / 1806

Fig. 5

Fig. 6

Fig. 7

Fig. 8

Fig. 9

Fig. 10

Fig. 11

Fig. 12

## INTERNATIONAL SEARCH REPORT

International application No.

**PCT/CN2023/143686**

### A. CLASSIFICATION OF SUBJECT MATTER

G01C21/16(2006.01)i

According to International Patent Classification (IPC) or to both national classification and IPC

### B. FIELDS SEARCHED

Minimum documentation searched (classification system followed by classification symbols)

IPC:G01C21

Documentation searched other than minimum documentation to the extent that such documents are included in the fields searched

Electronic data base consulted during the international search (name of data base and, where practicable, search terms used)

CNABS, CNTXT, CNKI: 差, 观测, 惯导, 惯性, 矫正, 滤波, 视觉, 速度, 位置, 位姿, 相对, 校正, 修正, 预测, 状态, 姿态 DWPI, EPTXT, USTXT, WOTXT, VEN: attitude, calibrate, correct, filter, gesture, IMU, inertial, INS, location, pose, position, posture, relative, speed, velocity

### C. DOCUMENTS CONSIDERED TO BE RELEVANT

| Category* | Citation of document, with indication, where appropriate, of the relevant passages | Relevant to claim No. |
|---|---|---|
| X | CN 114323011 A (COMPUTER APPLICATION TECHNOLOGY RESEARCH INSTITUTE, CHINA NORTH INDUSTRIES GROUP CORPORATION) 12 April 2022 (2022-04-12) description, paragraphs 68-189 | 1-15 |
| X | CN 114383612 A (COMPUTER APPLICATION TECHNOLOGY RESEARCH INSTITUTE, CHINA NORTH INDUSTRIES GROUP CORPORATION) 22 April 2022 (2022-04-22) description, paragraphs 34-165 | 1-15 |
| A | CN 111982106 A (BEIJING INFORMATION SCIENCE & TECHNOLOGY UNIVERSITY) 24 November 2020 (2020-11-24) entire document | 1-15 |
| A | CN 105698765 A (TIANJIN UNIVERSITY) 22 June 2016 (2016-06-22) entire document | 1-15 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 March 2024** | **26 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| :-- |
| **PCT/CN2023/143686** |

**C.    DOCUMENTS CONSIDERED TO BE RELEVANT**

| Category* | Citation of document, with indication, where appropriate, of the relevant passages | Relevant to claim No. |
| :--: | :-- | :--: |
| A | CN 112985391 A (NATIONAL UNIVERSITY OF DEFENSE TECHNOLOGY OF PLA) 18 June 2021 (2021-06-18)<br>    entire document | 1-15 |
| A | CN 114199239 A (COMPUTER APPLICATION TECHNOLOGY RESEARCH INSTITUTE, CHINA NORTH INDUSTRIES GROUP CORPORATION et al.) 18 March 2022 (2022-03-18)<br>    entire document | 1-15 |
| A | JP 2021173577 A (FA DRONE CO., LTD.) 01 November 2021 (2021-11-01)<br>    entire document | 1-15 |

Form PCT/ISA/210 (second sheet) (July 2022)

**INTERNATIONAL SEARCH REPORT**
Information on patent family members

International application No.

**PCT/CN2023/143686**

| Patent document cited in search report | | | Publication date (day/month/year) | Patent family member(s) | | | Publication date (day/month/year) |
|---|---|---|---|---|---|---|---|
| CN | 114323011 | A | 12 April 2022 | None | | | |
| CN | 114383612 | A | 22 April 2022 | None | | | |
| CN | 111982106 | A | 24 November 2020 | None | | | |
| CN | 105698765 | A | 22 June 2016 | CN | 105698765 | B | 18 September 2018 |
| CN | 112985391 | A | 18 June 2021 | CN | 112985391 | B | 10 August 2021 |
| CN | 114199239 | A | 18 March 2022 | None | | | |
| JP | 2021173577 | A | 01 November 2021 | JP | 7405416 | B2 | 26 December 2023 |

Form PCT/ISA/210 (patent family annex) (July 2022)

**REFERENCES CITED IN THE DESCRIPTION**

**Patent documents cited in the description**

- CN 202211732722

- CN 202310158835